(19) Europäisches Patentamt
European Patent Office
Office européen des brevets

(11) **EP 3 806 557 B1**

(12) **EUROPEAN PATENT SPECIFICATION**

(45) Date of publication and mention
of the grant of the patent:
**24.06.2026 Bulletin 2026/26**

(21) Application number: **18921863.9**

(22) Date of filing: **06.06.2018**

(51) International Patent Classification (IPC):
*H04W 68/00* (2009.01)   *H04W 76/28* (2018.01)

(52) Cooperative Patent Classification (CPC):
**H04W 68/005; H04W 76/28**

(86) International application number:
**PCT/CN2018/090172**

(87) International publication number:
**WO 2019/232732 (12.12.2019 Gazette 2019/50)**

(54) **PAGING MESSAGE TRANSMISSION METHODS AND RELATED DEVICES**

VERFAHREN ZUR ÜBERTRAGUNG VON FUNKRUFNACHRICHTEN UND ZUGEHÖRIGE GERÄTE

PROCÉDÉS DE TRANSMISSION DE MESSAGE DE RADIOMESSAGERIE ET DISPOSITIFS
ASSOCIÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.04.2021 Bulletin 2021/15**

(73) Proprietor: **HUAWEI TECHNOLOGIES CO., LTD.
Shenzhen, Guangdong 518129 (CN)**

(72) Inventors:
 • **YU, Yinghui
   Shenzhen, Guangdong 518129 (CN)**
 • **SHAN, Baokun
   Shenzhen, Guangdong 518129 (CN)**

(74) Representative: **Maiwald GmbH
Elisenhof
Elisenstraße 3
80335 München (DE)**

(56) References cited:
WO-A1-2018/031141      CN-A- 101 883 350
CN-A- 102 300 331      CN-A- 107 027 175
CN-A- 107 223 357      CN-A- 107 734 643
US-A1- 2014 198 738    US-A1- 2016 165 638
US-B2- 9 723 651

• **"3 Generation Partnership Project; Technical
Specification Group Radio Access Network;
Evolved Universal Terrestrial Radio Access (E-
UTRA); User Equipment (UE) procedures in idle
mode (Release 14)", 3GPP STANDARD;
TECHNICAL SPECIFICATION; 3GPP TS 36.304,
3RD GENERATION PARTNERSHIP PROJECT
(3GPP), MOBILE COMPETENCE CENTRE ; 650,
ROUTE DES LUCIOLES ; F-06921 SOPHIA-
ANTIPOLIS CEDEX ; FRANCE, vol. RAN WG2, no.
V14.6.0, 2 April 2018 (2018-04-02), pages 1 - 50,
XP051450722**

**Description**

**TECHNICAL FIELD**

This application relates to the field of wireless communications technologies, and in particular, to a paging message transmission methods and related devices.

**BACKGROUND**

Mobile communications have greatly changed lives of people, but people's pursuit of mobile communications with higher performance has never stopped. A 5th generation (5G) system emerges to cope with explosive growth of mobile data traffic, massive device connections, and continuous emergence of various new services and application scenarios in the future. As a component of the 5G, an internet of things has a rapidly increasing market demand. A forecast shows that a quantity of connections to the 5G internet of things will reach 18 billion by the year 2022.

US 2016/165638 A1 describes methods and an apparatuses for a conveying system information by a base station. The method generally includes broadcasting a first system information common to each cell of a group of cells in an area; and broadcasting a second system information that can vary between cells in the group of cells, wherein the second system information is broadcast more frequently than the first message.

Currently, the 3GPP standard organization has proposed a solution for a feature of the internet of things based on a cellular network, for example, narrowband internet of things (Narrow Band-Internet of Things, NB-IoT) communication and machine-type communication (Machine-Type Communications, MTC). A feature of a narrowband technology is used in both the NB-IoT communication and the MTC to carry an IoT service. An NB-IoT network uses a new air interface technology independent of an existing cellular network (Long Term Evolution, LTE), has lower terminal costs, and supports a lower rate and lower mobility. An MTC network is a portion of the conventional cellular network. Costs of a terminal are slightly higher than that in the NB-IoT, and the terminal is applicable to an internet of things service having a higher rate and higher mobility. In comparison with the conventional cellular network, the internet of things has the following service and terminal device requirements: a low service rate, a long cycle, massive connections, low costs, low power consumption, and the like.

In the internet of things, there is only one value of a default discontinuous reception (Discontinuous Reception, DRX) cycle currently used by each cell and for paging. For example, in the NB-IoT, default DRX of a base station is {rf128, rf256, rf512, rf1024}. There are four values in total. The base station may set one of the values, for example, rf512, as a value of default DRX of a cell based on a coverage level requirement that is of user equipment (User Equipment, UE) that needs to receive paging and that is on a current network, to be specific, a requirement on a repetition quantity, on a physical downlink control channel (Physical Downlink Control Channel, PDCCH), of paging received by each UE. In the internet of things, there may be both a terminal with a deep coverage level (such a terminal has a higher requirement on a transmission repetition quantity on the PDCCH and a physical downlink shared channel (Physical Downlink Shared Channel, PDSCH), for example, the PDCCH and the physical downlink shared channel need to repeat 1024 times or a maximum of 2048 times) and a non-deep-coverage terminal (to be specific, a repetition quantity on the PDCCH is smaller, for example, one, two, or four). Therefore, a configuration of the default DRX cycle of the base station satisfies a requirement on a latency caused by a repetition quantity, for example, 1024, of the deep-coverage terminal. However, the PDCCH occupies only 1.024 seconds. Then, a time for transmitting the PUSCH is considered. Therefore, the default DRX cycle of the base station needs to be set to 5.12s. At an early stage of an internet of things design, it is considered that the internet of things service has no requirement on a latency, that is, all internet of things services are latency-insensitive. However, in view of development of a current internet of things service, the internet of things further needs to support a latency-sensitive service, for example, a smart street lamp service for which an end-to-end latency is 3s to 5s. In a smart street lamp application scenario, a command for turning on or off a street lamp triggers, by using a paging message, a terminal to receive downlink data. If the default DRX cycle is relatively long, a latency of receiving the downlink (Downlink, DL) data by the terminal is relatively long.

In addition, after receiving the paging message, the terminal further needs 2 to 3 seconds to establish a connection to the base station and receive the downlink data. In the current technology, no related technology is provided to satisfy a latency requirement of a latency-sensitive service, and there is no effective means of reducing a downlink data receiving latency either.

**SUMMARY**

This application provides a paging message transmission methods and related devices, to support different paging cycles in a cell, and satisfy paging requirements of both a short-latency terminal and a deep-coverage terminal. The invention is defined by the appended independent claims 1-3 and 5-9. Dependent claim 4 defines a further embodiment of the invention.

According to a first aspect, a paging message transmission method is provided. The method includes: receiving a first paging message from a core network device, where the first paging message includes a first indication corresponding to a terminal, and the first indication is used to indicate that the terminal supports latency-sensitive paging;

determining a first paging carrier group corresponding to the first indication, where the first paging carrier group includes a portion of a plurality of paging carriers of a network side device; and
paging the terminal on the paging carrier in the first paging carrier group.

During implementation of this embodiment of this application, the first paging message sent by the core network device is received, the first paging carrier group corresponding to the first indication is determined according to the first indication in the first paging message, and a paging carrier is selected from the determined first paging carrier group to page the terminal. In this way, a latency-sensitive terminal can be paged, different paging cycles in a cell can be supported, and paging requirements of both a short-latency terminal and a deep-coverage terminal are satisfied.

In an optional implementation, the method further includes: receiving paging capability information from the terminal, where the paging capability information includes a second indication, and the second indication is used to indicate that the terminal supports the latency-sensitive paging; and
sending paging capability-related information to the core network device, where the paging capability-related information includes a third indication, and the third indication is used to indicate that the terminal supports the latency-sensitive paging.

During implementation of this embodiment of this application, the terminal may send the paging capability information to the network side device, so that the network side device knows that the terminal device supports the latency-sensitive paging. The network side device may send the paging capability-related information to the core network device, so that the core network device knows that the terminal device supports the latency-sensitive paging, and stores a paging capability of the terminal device.

In an optional implementation, the method further includes: sending paging configurations to the terminal, where the paging configurations are used to indicate the first paging carrier group and a first paging configuration parameter of the first paging carrier group, and the first paging configuration parameter includes a first default paging cycle DRX cycle.

In an optional implementation, the paging configurations are further used to indicate a second paging carrier group and a second paging configuration parameter of the second paging carrier group, the second paging carrier group includes another portion of the plurality of paging carriers of the network side device, and the second paging configuration parameter includes a second DRX cycle.

It may be understood that the network side device configures paging configurations of a plurality of paging carrier groups, and the terminal obtains, by receiving the paging configurations sent by the network side device, paging configuration parameters corresponding to different carrier groups.

In an optional implementation, the DRX cycle corresponding to the first paging carrier group is less than the second DRX cycle corresponding to the second paging carrier group.

During implementation of this embodiment of this application, the DRX cycle corresponding to the latency-sensitive paging is less than the DRX cycle corresponding to latency-insensitive paging. The terminal may select a corresponding paging configuration parameter from the received paging configurations based on a service attribute of the terminal or depending on whether the terminal supports the latency-sensitive paging, to complete a subsequent paging process.

According to a second aspect, a paging message transmission method is provided. The method includes:

receiving paging configurations from a network side device, where the paging configurations are used to indicate a first paging carrier group and a first paging configuration parameter of the first paging carrier group, the first paging carrier group includes a portion of a plurality of paging carriers of the network side device, the first paging configuration parameter includes a first DRX cycle, and the first paging carrier group is associated with latency-sensitive paging; and
receiving a paging message on the paging carrier in the first paging carrier group based on the first paging configuration parameter if a terminal supports the latency-sensitive paging.

During implementation of this embodiment of this application, the network side device groups the paging carriers, performs different paging configurations on different groups of paging carriers, and then, sends the paging configurations to the terminal, so that different paging cycles in a cell can be supported, and paging requirements of both a short-latency terminal and a deep-coverage terminal can be satisfied.

In an optional implementation, the method further includes:
sending paging capability information to the network side device, where the paging capability information includes a second indication, and the second indication is used to indicate that the latency-sensitive paging is supported.

During implementation of this embodiment of this application, the terminal reports the paging capability information of the terminal, to help the network side device determine a paging carrier group corresponding to the terminal, and sends the paging message to the terminal.

In an optional implementation, the method further includes:
the paging configurations are further used to indicate a second paging carrier group and a second paging configuration parameter of the second paging carrier group, the second paging carrier group includes another portion of the plurality of paging carriers of the network side device, and the second paging configuration parameter includes a second DRX cycle.

During implementation of this embodiment of this application, the network side device can group the paging carriers, and perform the different paging configurations on the different groups of paging carriers to obtain different paging configuration information. The first DRX cycle supporting the latency-sensitive paging is less than the second DRX cycle supporting latency-insensitive paging.

According to a third aspect, a paging message transmission method is provided. The method includes:

receiving paging capability-related information from a network side device, where the paging capability-related information includes a first indication corresponding to a terminal, and the first indication is used to indicate that the terminal supports latency-sensitive paging; and
sending a first paging message to the network side device, where the first paging message includes a second indication, and the second indication is used to indicate the latency-sensitive paging.

During implementation of this embodiment of this application, the first paging message is sent to the network side device, and the network side device is enabled to determine, according to the second indication in the first paging message, a paging carrier group corresponding to the second indication, where the paging carrier group supports the latency-sensitive paging, so that different paging cycles in a cell can be supported, and paging requirements of both a short-latency terminal and a deep-coverage terminal are satisfied.

In an optional implementation, the method further includes:
receiving a paging trigger message, where the paging trigger message is used to trigger paging for the terminal.

During implementation of this embodiment of this application, the core network device sends the first paging message to the network side device only when the core network device is triggered.

According to a fourth aspect, a downlink data transmission method is provided. The method includes:

receiving a message 3 from a terminal in a random access process, where the message 3 includes first information, and the first information is used to indicate mobile terminated early data transmission;
obtaining downlink data of the terminal from a first core network device; and
sending a message 4 to the terminal, where the message 4 includes the downlink data.

In an optional implementation, the first information is an identity of the terminal, and there is an association relationship between the identity of the terminal and the mobile terminated early data transmission;

the first information is a cause value of the message 3;
the first information is capability information or category information of the terminal; or
the first information is information used to request the mobile terminated early data transmission.

In an optional implementation, the obtaining downlink data of the terminal from a first core network device includes:

sending second information to the first core network device, where the second information is used to indicate the mobile terminated early data transmission of the terminal; and
receiving the downlink data of the terminal from the first core network device.

In an optional implementation, the obtaining downlink data of the terminal from a first core network device includes:

sending the second information to a second core network device, where the second information is used to indicate the mobile terminated early data transmission of the terminal;
establishing a data bearer of the terminal with the first core network device; and
receiving the downlink data of the terminal from the first core network device over the data bearer.

In an optional implementation, the method further includes:
receiving a first message from the second core network device, where the first message is used to indicate to resume a context of the terminal.

Another downlink data transmission method is further provided. The method includes:

receiving a first RRC message sent by a terminal, where the first RRC message includes an identity of the terminal;
obtaining mobile terminated early data transmission indication information of the terminal;
sending a first request message to a core network device based on the mobile terminated early data transmission indication information, where the first request message carries mobile terminated early data transmission-related information of the terminal; and
receiving data in downlink early data transmission that is sent by the core network device, and sending the data in the downlink early data transmission to the terminal.

During implementation of this embodiment of the present invention, a network side device obtains the mobile terminated early data transmission indication information, to obtain the data in the downlink early data transmission from the core network device in advance, and send the data in the downlink early data transmission to the terminal, and does not need to send downlink data to the terminal after an RRC connection is established, so that downlink early data transmission can be implemented.

In an optional implementation, the receiving a first RRC message sent by a terminal includes: receiving an RRC connection request message, an RRC early data transmission request message, or an RRC connection resume request message that is sent by the terminal.

In an optional implementation, the obtaining mobile terminated early data transmission indication information of the terminal includes:

receiving a first paging message sent by the core network device, where the first paging message includes mobile terminated early data transmission indication information and an identity of a paged terminal; comparing the identity of the terminal in the first paging message with the identity of the terminal in the first RRC message; and obtaining the mobile terminated early data transmission indication information in the first paging message if the identities are consistent; or
if the first RRC message includes a mobile terminated early data transmission request message, obtaining the mobile terminated early data transmission indication information in the first RRC message.

During implementation of this embodiment of the present invention, the network side device can obtain the mobile terminated early data transmission indication information from the first paging message sent by the core network device or the first RRC message sent by the terminal, to obtain the data in the downlink early data transmission from the core network device in advance, and send the data in the downlink early data transmission to the terminal, and does not need to send the downlink data to the terminal after the RRC connection is established, so that downlink early data transmission can be implemented.

In an optional implementation, that the first RRC message includes mobile terminated early data transmission indication information includes:

the first RRC message includes a mobile terminated early data transmission indication bit; or
the first RRC message includes an access cause value, where the access cause value is mobile terminated access.

During implementation of this embodiment of the present invention, the network side device can obtain the mobile terminated early data transmission indication information by using the mobile terminated early data transmission indication bit or the access cause value in the first RRC message. The manner is simple and efficient, and implementation complexity is low.

In an optional implementation, the method further includes:

if the first RRC message is the RRC connection request message or the RRC connection resume request message, the mobile terminated early data transmission indication information is the mobile terminated early data transmission indication bit; or
if the first RRC message is the RRC early data transmission request message, the mobile terminated early data transmission indication information is the mobile terminated early data transmission indication bit or the access cause value, where the access cause value is the mobile terminated access.

It may be understood that, if the first RRC message is the RRC connection request message or the RRC connection resume request message, because the RRC connection request message or the RRC connection resume request message has already included a mobile terminated access cause value, the network side device cannot obtain the mobile terminated early data transmission indication information by using a cause value, and can obtain the mobile terminated early data transmission indication information by using only the mobile terminated early data transmission indication bit in the RRC connection request message or the RRC connection resume request message. If the first RRC message is the RRC early data transmission request message, the network side device can obtain the mobile terminated early data transmission indication information by using the access cause value in the RRC early data transmission request message, where the access cause value is the mobile terminated access. Certainly, the network side device can alternatively obtain the mobile terminated early data transmission indication information by using the mobile terminated early data transmission indication bit in the RRC early data transmission request message.

According to a fifth aspect, a downlink data transmission method is provided. The method includes:

sending a message 3 to a network side device in a random access process, where the message 3 includes first information, and the first information is used to indicate mobile terminated early data transmission; and
receiving a message 4 from the network side device, where the message 4 includes downlink data of a terminal.

In an optional implementation, the first information is an identity of the terminal, and there is an association relationship between the identity of the terminal and the mobile terminated early data transmission;

the first information is a cause value of the message 3;
the first information is capability information or category information of the terminal; or
the first information is information used to request the mobile terminated early data transmission.

Another downlink data transmission method is further provided. The method includes:

sending a first RRC message to a network side device, where the first RRC message includes mobile terminated early data transmission indication information and an identity of a terminal, and the mobile terminated early data transmission indication information is used by the network side device to send a first request message to a core network device and receive data in downlink early data transmission that is sent by the core network device; and
receiving data in downlink early data transmission that is sent by the network side device.

During implementation of this embodiment of the present invention, the network side device receives the first RRC message sent by the terminal, and obtains the mobile terminated early data transmission indication information from the RRC message, to obtain the data in the downlink early data transmission from the core network device in advance, and send the data in the downlink early data transmission to the terminal, and does not need to send downlink data to the terminal after an RRC connection is established, so that downlink early data transmission can be implemented.

In an optional implementation, the sending a first RRC message to a network side device includes: sending an RRC connection request message, an RRC early data transmission request message, or an RRC connection resume request message to the network side device.

In an optional implementation, that the first RRC message includes mobile terminated early data transmission indication information includes:

the first RRC message includes a mobile terminated early data transmission indication bit; or
the first RRC message includes an access cause value, where the access cause value is mobile terminated access.

During implementation of this embodiment of the present invention, the network side device can obtain the mobile terminated early data transmission indication information by using the mobile terminated early data transmission indication bit or the access cause value in the first RRC message. The manner is simple and efficient, and implementation complexity is low.

In an optional implementation, the method further includes:

if the first RRC message is the RRC connection request message or the RRC connection resume request message, the mobile terminated early data transmission indication information is the mobile terminated early data transmission indication bit; or
if the first RRC message is the RRC early data transmission request message, the mobile terminated early data transmission indication information is the mobile terminated early data transmission indication bit or the access cause value, where the access cause value is the mobile terminated access.

It may be understood that, if the first RRC message is the RRC connection request message or the RRC connection resume request message, because the RRC connection request message or the RRC connection resume request message has already included a mobile terminated access cause value, the network side device cannot obtain the mobile terminated early data transmission indication information by using a cause value, and can obtain the mobile terminated early data transmission indication information by using only the mobile terminated early data transmission indication bit in the RRC connection request message or the RRC connection resume request message. If the first RRC message is the RRC early data transmission request message, the network side device can obtain the mobile terminated early data transmission indication information by using the access cause value in the RRC early data transmission request message, where the access cause value is the mobile terminated access. Certainly, the network side device can alternatively obtain the mobile terminated early data transmission indication information by using the mobile terminated early data transmission indication bit in the RRC early data transmission request message.

According to a sixth aspect, a downlink data transmission method is provided. The method includes:

receiving a first paging message from a core network device, where the first paging message includes a first identity of a paging object and downlink data of the paging object;
sending a second paging message to the paging object, where the second paging message includes a second identity of the paging object and scheduling information of the downlink data; and
sending the downlink data to the paging object based on the scheduling information.

In an optional implementation, the method further includes:

scrambling the downlink data by using a radio network temporary identifier RNTI of the paging object; and

the sending the downlink data to the paging object based on the scheduling information includes:
sending the scrambled downlink data to the paging object based on the scheduling information.

In an optional implementation, the method further includes:
sending, to the paging object, control information for scheduling the second paging message.

In an optional implementation, the method further includes:

scrambling the control information by using a radio network temporary identifier RNTI of the paging object; and
the sending, to the paging object, control information includes:
sending the scrambled control information to the paging object.

In an optional implementation, the method further includes:

obtaining the RNTI of the paging object; and
sending a correspondence between the second identity and the RNTI to the paging object.

In an optional implementation, the paging object is a terminal or a terminal group.

Another downlink data transmission method is further provided. The method includes:

receiving a first paging message sent by a core network device, where the first paging message includes paging capability information of a terminal, paging identity information, and downlink data; and
sending a second paging message to the terminal, where the second paging message includes scheduling information of the downlink data, and the scheduling information is used by the terminal to receive the downlink data.

During implementation of this embodiment of this application, a network side device receives the first paging message sent by the core network device, obtains the paging identity information and the downlink data from the first paging message, and then, sends the second paging message including the scheduling information of the downlink data to the terminal, so that when receiving the second paging message, the terminal can obtain the downlink data based on the scheduling information of the downlink data, and does not need to establish a connection to the network side device to obtain the downlink data, and a downlink data receiving latency is effectively reduced.

In an optional implementation, the paging identity information includes a group paging identity and/or a terminal paging identity.

During implementation of this embodiment of this application, downlink group data can be quickly delivered.

In an optional implementation, before the sending a second paging message to the terminal, the method further includes:

mapping the group paging identity into a group radio paging identity, and sending the group paging identity and/or a mapping relationship between the group paging identity and the group radio paging identity to the terminal by using a broadcast message or dedicated signaling.

During implementation of this embodiment of this application, the terminal can accurately and quickly determine whether the group paging identity is a group identity supported by the terminal.

In an optional implementation, the sending a second paging message to the terminal includes:

scrambling, by using a P-RNTI, a PDCCH for scheduling the second paging message, so that the terminal receives scheduling information that is in the second paging message and that is carried on the PDCCH, and receives, based on the scheduling information, the second paging message sent on a physical downlink shared channel PDSCH.

During implementation of this embodiment of this application, the PDCCH for scheduling the second paging message is scrambled by using the P-RNTI, so that a terminal in idle mode monitors, by using the P-RNTI, the PDCCH for scheduling the second paging message, and the terminal can quickly and accurately receive the scheduling information in the second paging message.

In an optional implementation, the sending a second paging message to the terminal includes:

scrambling, by using a group-RNTI, a PDCCH for scheduling the second paging message, so that the terminal receives scheduling information that is in the second paging message and that is carried on the PDCCH, and receives, based on the scheduling information, the second paging message sent on a PDSCH.

During implementation of this embodiment of this application, group identities may be distinguished by using group-RNTIs. The terminal determines and receives corresponding downlink group data by receiving different group-RNTIs.

According to a seventh aspect, a downlink data transmission method is provided. The method includes:

receiving, by a terminal, a first paging message from a network side device, where the first paging message includes an identity of a paging object and scheduling information of downlink data of the paging object; and

receiving, by the terminal, the downlink data based on the scheduling information if the identity of the paging object matches a paging identity of the terminal.

In an optional implementation, the downlink data is scrambled by using a radio network temporary identifier RNTI of the paging object.

In an optional implementation, the method further includes:

receiving, from the network side device, control information for scheduling the second paging message.

In an optional implementation, the control information is scrambled by using a radio network temporary identifier RNTI of the paging object.

In an optional implementation, the method further includes:

receiving a correspondence between the second identity and the RNTI from the network side device.

In an optional implementation, the paging object is the terminal or a terminal group to which the terminal belongs.

Another downlink data transmission method is further provided. The method includes:

receiving a second paging message sent by a network side device, where the second paging message includes scheduling information of downlink data; and

obtaining the downlink data in the second paging message based on the scheduling information of the downlink data.

During implementation of this embodiment of this application, a terminal receives the second paging message sent by the network side device, obtains the downlink data based on the scheduling information, in the second paging message, of the downlink data, does not need to obtain the downlink data after establishing a connection to the network side device, and directly obtains the downlink data from the paging message sent by the network side device, so that a downlink data receiving latency is effectively reduced.

In an optional implementation, before the receiving a second paging message sent by a network side device, the method further includes:

receiving a group paging identity and/or a mapping relationship between the group paging identity and a group radio paging identity that are/is sent by the network side device by using a broadcast message or dedicated signaling, where the mapping relationship includes that the network side device maps the group paging identity into the group radio paging identity.

During implementation of this embodiment of this application, the terminal can accurately and quickly determine whether the group paging identity is a group identity supported by the terminal.

In an optional implementation, the receiving a second paging message sent by a network side device includes:

monitoring, by using a P-RNTI, a PDCCH for scheduling the second paging message, receiving scheduling information that is in the second paging message and that is carried on the PDCCH, and receiving, based on the scheduling information, the second paging message sent on a PDSCH.

During implementation of this embodiment of this application, the PDCCH for scheduling the second paging message is scrambled by using the P-RNTI, so that a terminal in idle mode monitors, by using the P-RNTI, the PDCCH for scheduling the second paging message, and the terminal can quickly and accurately receive the scheduling information in the second paging message.

In an optional implementation, the receiving a second paging message sent by a network side device includes: monitoring, by using a group-RNTI, a PDCCH for scheduling the second paging message, receiving scheduling information that is in the second paging message and that is carried on the PDCCH, and receiving, based on the scheduling information, the second paging message sent on a PDSCH.

During implementation of this embodiment of this application, group identities may be distinguished by using group-RNTIs. The terminal determines and receives corresponding downlink group data by receiving different group-RNTIs.

According to an eighth aspect, a network side device is provided. The network side device is the network side device according to any one of the first aspect, the fourth aspect, the sixth aspect, or the optional implementations of the first aspect, the fourth aspect, or the sixth aspect.

According to a ninth aspect, a terminal device is provided. The terminal device is the terminal device according to any one of the second aspect, the fifth aspect, the seventh aspect, or the optional implementations of the second aspect, the fifth aspect, or the seventh aspect.

According to a tenth aspect, a core network device is provided. The core network device is the core network device according to any one of the third aspect or the optional implementations of the third aspect.

According to an eleventh aspect, a network side device is provided. The network side device includes a processor, a memory, and a transceiver.

The processor, the memory, and the transceiver are connected to each other, the memory is configured to store a computer program, the computer program includes a program instruction, and the processor is configured to invoke the program instruction to perform the following steps:

> receiving a first paging message from a core network device, where the first paging message includes a first indication corresponding to a terminal, and the first indication is used to indicate that the terminal supports latency-sensitive paging;
> determining a paging carrier group corresponding to the first indication, where the paging carrier group includes one or more paging carriers; and
> paging the terminal on the carrier in the paging carrier group.

According to a twelfth aspect, a terminal device is provided. The terminal device includes a processor, a memory, and a transceiver.

The processor, the memory, and the transceiver are connected to each other, the memory is configured to store a computer program, the computer program includes a program instruction, and the processor is configured to invoke the program instruction to perform the following steps:

> receiving paging configurations from a network side device, where the paging configurations are used to indicate a first paging carrier group and a first paging configuration parameter of the first paging carrier group, the first paging carrier group includes a portion of a plurality of paging carriers of the network side device, the first paging configuration parameter includes a first DRX cycle, and the first paging carrier group is associated with latency-sensitive paging; and
> receiving a paging message on the paging carrier in the first paging carrier group based on the first paging configuration parameter if the terminal supports the latency-sensitive paging.

According to a thirteenth aspect, a core network device is provided. The core network device includes a processor, a memory, and a transceiver.

The processor, the memory, and the transceiver are connected to each other, the memory is configured to store a computer program, the computer program includes a program instruction, and the processor is configured to invoke the program instruction to perform the following steps:

> receiving paging capability-related information from a network side device, where the paging capability-related information includes a first indication corresponding to a terminal, and the first indication is used to indicate that the terminal supports latency-sensitive paging; and
> sending a first paging message to the network side device, where the first paging message includes a second indication, and the second indication is used to indicate the latency-sensitive paging.

According to a fourteenth aspect, a network side device is provided. The network side device includes a processor, a memory, and a transceiver.

The processor, the memory, and the transceiver are connected to each other, the memory is configured to store a computer program, the computer program includes a program instruction, and the processor is configured to invoke the program instruction to perform the following steps:

> receiving a message 3 from a terminal in a random access process, where the message 3 includes first information, and the first information is used to indicate mobile terminated early data transmission;
> obtaining downlink data of the terminal from a first core network device; and
> sending a message 4 to the terminal, where the message 4 includes the downlink data.

According to a fifteenth aspect, a terminal device is provided. The terminal device includes a processor, a memory, and a transceiver.

The processor, the memory, and the transceiver are connected to each other, the memory is configured to store a computer program, the computer program includes a program instruction, and the processor is configured to invoke the program instruction to perform the following steps:

> sending a message 3 to a network side device in a random access process, where the message 3 includes first information, and the first information is used to indicate mobile terminated early data transmission; and
> receiving a message 4 from the network side device, where the message 4 includes downlink data of the terminal.

According to a sixteenth aspect, a network side device is provided. The network side device includes a processor, a memory, and a transceiver.

The processor, the memory, and the transceiver are connected to each other, the memory is configured to store a computer program, the computer program includes a program instruction, and the processor is configured to invoke the program instruction to perform the following steps:

> receiving a first paging message from a core network device, where the first paging message includes a first identity of a paging object and downlink data of the paging object;
> sending a second paging message to the paging object, where the second paging message includes a second identity of the paging object and scheduling information of the downlink data; and
> sending the downlink data to the paging object based on the scheduling information.

According to a seventeenth aspect, a terminal device is provided. The terminal device includes a processor, a memory, and a transceiver.

The processor, the memory, and the transceiver are connected to each other, the memory is configured to store a computer program, the computer program includes a program instruction, and the processor is configured to invoke the program instruction to perform the following steps:

> receiving, by the terminal, a first paging message from a network side device, where the first paging message includes an identity of a paging object and scheduling information of downlink data of the paging object; and
> receiving, by the terminal, the downlink data based on the scheduling information if the identity of the paging object matches a paging identity of the terminal.

According to an eighteenth aspect, an embodiment of this application provides a computer-readable storage medium. The computer-readable storage medium stores a computer program. The computer program includes a program instruction. When the program instruction is executed by a processor of a network side device, the processor of the network side device is enabled to perform the method according to any one of the first aspect or the optional implementations of the first aspect; when the program instruction is executed by a processor of a terminal device, the processor of the terminal device is enabled to perform the method according to any one of the second aspect or the optional implementations of the second aspect; or when the program instruction is executed by a processor of a core network device, the processor of the core network device is enabled to perform the method according to any one of the third aspect or the optional implementations of the third aspect.

According to a nineteenth aspect, an embodiment of this application provides a computer-readable storage medium. The computer-readable storage medium stores a computer program. The computer program includes a program instruction. When the program instruction is executed by a processor of a network side device, the processor of the network side device is enabled to perform the method according to any one of the fourth aspect or the optional implementations of the fourth aspect; or when the program instruction is executed by a processor of a terminal device, the processor of the terminal device is enabled to perform the method according to any one of the fifth aspect or the optional implementations of the fifth aspect.

According to a twentieth aspect, an embodiment of this application provides a computer-readable storage medium. The computer-readable storage medium stores a computer program. The computer program includes a program instruction. When the program instruction is executed by a processor of a network side device, the processor of the network side device is enabled to perform the method according to any one of the seventh aspect or the optional implementations of the seventh aspect; or when the program instruction is executed by a processor of a terminal device, the processor of the terminal device is enabled to perform the method according to any one of the eighth aspect or the optional implementations of the eighth aspect.

## BRIEF DESCRIPTION OF DRAWINGS

FIG. 1 is a schematic diagram of a network connection on an NB-IoT according to an embodiment of this application;
FIG. 2 is a schematic flowchart of a paging message transmission method according to an embodiment of this application;
FIG. 3 is a schematic flowchart of another paging message transmission method according to an embodiment of this application;
FIG. 4 is a schematic diagram of paging carrier grouping according to an embodiment of this application;
FIG. 5 is a schematic flowchart of a downlink data transmission method according to an embodiment of this application;
FIG. 6A and FIG. 6B are a schematic flowchart of another downlink data transmission method according to an embodiment of this application;
FIG. 7 is a schematic flowchart of another downlink data transmission method according to an embodiment of this application;
FIG. 8 is a schematic flowchart of another downlink data transmission method according to an embodiment of this application;
FIG. 9 is a schematic structural diagram of a network side device according to an embodiment of this application;
FIG. 10 is a schematic structural diagram of another network side device according to an embodiment of this application;
FIG. 11 is a schematic structural diagram of another network side device according to an embodiment of this application;
FIG. 12 is a schematic structural diagram of another network side device according to an embodiment of this application;
FIG. 13 is a schematic structural diagram of another network side device according to an embodiment of this application; and
FIG. 14 is a schematic structural diagram of another network side device according to an embodiment of this application.

## DESCRIPTION OF EMBODIMENTS

The following clearly and completely describes the technical solutions in embodiments of this application with reference to the accompanying drawings. Apparently, the described embodiments are merely some but not all of the embodiments of this application. All other embodiments obtained by a person of ordinary skill based on the embodiments of this application without creative efforts shall fall within the protection scope of this application.

The technical solutions in the embodiments of this application may be applied to various communications systems such as a global system for mobile communications (global system of mobile communication, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS) system, a worldwide interoperability for microwave access (worldwide interoperability for microwave access, WiMAX) communications system, a 5th generation (5th generation, 5G) system, or a new radio (new radio, NR) system.

A terminal device in the embodiments of this application may be user equipment, an access terminal, a subscriber unit, a subscriber station, a mobile station, a mobile station, a remote station, a remote terminal, a mobile device, a user terminal, a terminal, a wireless communications device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device on a future 5G network, a terminal device in a future evolved public land mobile network (public land mobile network, PLMN), or the like. This is not limited in the embodiments of this application.

A network device in the embodiments of this application may be a device configured to communicate with the terminal device. The network device may be any device that has a wireless transceiver function or a chip that may be disposed in the device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a base band unit (base band Unit, BBU), an access point (access point, AP) in a wireless fidelity (wireless fidelity, Wi-Fi) system, a wireless relay node, a wireless backhaul node, a transmission point (transmission point, TP), a transmission reception point (transmission and reception point, TRP), or the like. Alternatively, the device may be a gNB or a transmission point (a TRP or a TP) in a 5G system such as an NR system, or an antenna panel or a group (including a plurality of antenna panels) of antenna panels of a base station in a 5G system, or may be a network node, such as a base band unit (BBU) or a distributed unit (distributed unit, DU), included in a gNB or a transmission point.

In some deployment, the gNB may include a centralized unit (centralized unit, CU) and a DU. The gNB may further include a radio frequency unit (radio unit, RU). The CU implements a portion of functions of the gNB, and the DU implements a portion of functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information on the RRC layer eventually becomes information on the PHY layer, or is converted from information on the PHY layer. Therefore, in such an architecture, higher layer signaling, such as RRC layer signaling or PHCP layer signaling, may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

In the embodiments of this application, a core network device may be a mobility management entity (Mobility Management Entity), a cellular internet of things serving gateway node (CIoT serving gateway node, C-SGN), a serving gateway (Serving Gateway, SGW), a packet data network gateway (packet data network gateway, P-GW), a home subscriber server (Home Subscriber Server, HSS), or the like. It should be noted that a specific type of the core network device is not limited in the embodiments of this application.

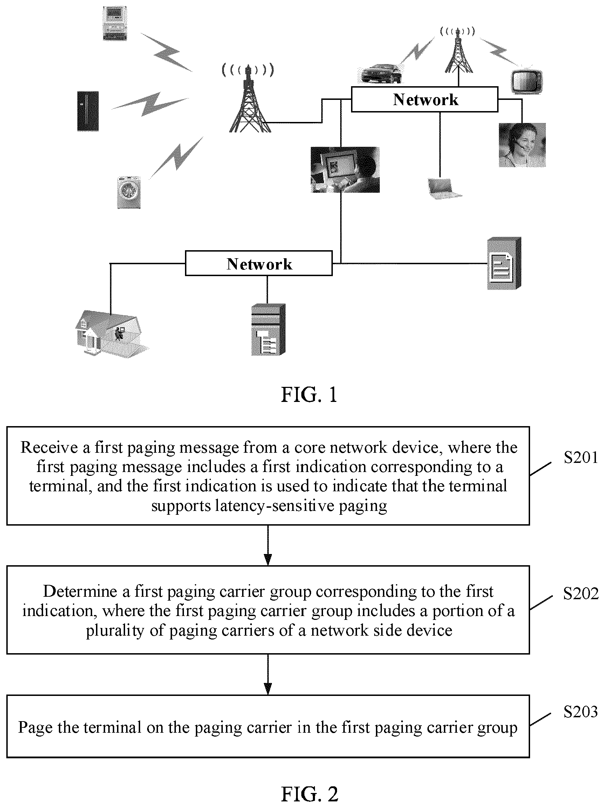

A paging message transmission method and a related device that are provided in the embodiments of this application are applicable to a narrowband internet of things (Narrow Band-Internet of Things, NB-IoT) network and a machine-type communication (Machine-Type Communication, MTC) network that are after a physical layer is changed, and the like. In the 3GPP standard, an internet of things (Internet of Things, IoT) service is carried based on a cellular network by designing a new air interface and taking full advantage of a narrowband technology. This type of internet of things is referred to as the NB-IoT. FIG. 1 is a schematic diagram of a network connection on an NB-IoT. The NB-IoT includes base stations and terminal devices (devices other than the base stations in FIG. 1 are the terminal devices). The base stations are connected to the terminal devices, the base stations are connected to each other, and the terminal devices are connected to each other. Compared with a conventional cellular network, the NB-IoT has features of a low rate and a long cycle of a service. The NB-IoT supports massive connections to terminal devices. The NB-IoT requires low costs and low power consumption of the terminal devices connected to the NB-IoT. In an internet of things, there is only one value of a default discontinuous reception cycle (Discontinuous Reception cycle, DRX cycle) currently used by each cell and for paging. However, there may be both a terminal with a deep coverage level and a non-deep-coverage terminal in a cell. A relatively large value is selected for a configuration of a default DRX cycle of the base station to satisfy the deep-coverage terminal. Therefore, a latency of receiving downlink data by the terminal is relatively long.

If only one default DRX cycle is configured for the base station, a latency requirement of a latency-sensitive terminal or a terminal having a latency-sensitive service cannot be satisfied. According to the paging message transmission method and the related device that are provided in the embodiments of this application, two or more default DRX cycles are configured in the cell that are respectively used to page the latency-sensitive terminal (the non-deep-coverage terminal) and a latency-insensitive terminal (the deep-coverage terminal). The method and the related device are based on a same inventive concept. The method and the related device have similar problem resolving principles. Therefore, for implementation of the related device and the method, refer to each other. Repeated descriptions are not further provided.

The following describes in detail the paging message transmission method and the related device that are provided in the embodiments of this application. It should be noted that, a presentation sequence of the embodiments of this application represents only a sequence of the embodiments, and does not represent priorities of the technical solutions provided in the embodiments.

FIG. 2 is a schematic flowchart of a paging message transmission method according to an embodiment of this application. The method includes but is not limited to the following steps.

S201: Receive a first paging message from a core network device, where the first paging message includes a first indication corresponding to a terminal, and the first indication is used to indicate that the terminal supports latency-sensitive paging.

It should be noted that the terminal device may be user equipment (User Equipment, UE), the core network device may be an MME, and a network side device may be a base station.

Specifically, the first indication may be capability information that is added to a paging capability reported by the UE and that indicates whether the UE supports the latency-sensitive paging, or may be information that is added to a paging capability reported by the UE and that indicates whether paging is non-deep coverage.

It should be noted that, in an NB-IoT or MTC system, services of most terminals are latency-insensitive, for example, a smart water/electricity meter or a smart household. Default DRX cycles of the terminals are larger, for example, 10.24 seconds. However, services of some terminals are latency-sensitive, for example, a smart electric lamp. Default DRX cycles of the terminals need to be smaller, for example, 1.024 seconds. Therefore, a DRX cycle of a terminal supporting the latency-sensitive paging is less than a DRX cycle of a terminal supporting latency-insensitive paging.

In a possible implementation, the method further includes: receiving paging capability information from the terminal, where the paging capability information includes a second indication, and the second indication is used to indicate that the terminal supports the latency-sensitive paging; and sending paging capability-related information to the core network device, where the paging capability-related information includes a third indication, and the third indication is used to indicate that the terminal supports the latency-sensitive paging.

Specifically, before receiving the first paging message sent by the core network device, the base station needs to obtain the paging capability information of the UE from the UE and send the paging capability information of the UE and paging coverage information (namely, information related to a repetition quantity on a PDCCH) to the MME. Therefore, the UE needs to establish a radio resource control (Radio Resource Control, RRC) connection and perform data communication with the base station. A communication process includes an exchange process of non-access stratum (Non-Access Stratum, NAS) signaling such as attach/TAU signaling or a data transmission process. The UE may send a UE capability message (UE capability information) to the base station, where the UE capability message carries the paging capability information of the UE. The paging capability information includes category information of the UE, a multi-carrier paging support capability of the UE, and the like. The paging capability information further includes information indicating that the UE supports sensitive paging.

After the data communication between the UE and the base station ends, the base station sends a UE context release complete message to the MME. The base station obtains the paging capability information of the UE and the paging coverage information in a process of performing data communication with the UE, and the paging coverage information is a repetition quantity on a physical downlink control channel (Physical Downlink Control Channel, PDCCH) on which the UE receives paging. For deep-coverage UE, the repetition quantity on the PDCCH for receiving the paging is large; for non-deep-coverage UE, the repetition quantity on the PDCCH for receiving the paging is smaller. Therefore, the base station provides coverage enhancement level information of paging for the UE by sending a context release message to the MME. After receiving the coverage enhancement level information, the MME stores the coverage enhancement level information. The base station provides the paging capability information of the UE by sending a UE capability information indication message (UE capability info indication) to the MME. The paging capability information of the UE is a paging message receiving capability of the UE, and includes any information such as a category of the UE, whether the UE supports multi-carrier paging, and a frequency band for the multi-carrier paging. The UE may use the paging capability information of the UE to carry the paging capability of the UE. The capability may be a radio paging capability of the UE in the standard. After receiving the UE capability information indication message, the MME stores the paging capability of the UE. The base station sends a connection release message to the UE. After receiving the connection release message, the UE releases the RRC connection. The UE enters an RRC idle mode from an RRC connected mode.

After the MME obtains, from an SGW, a downlink data arrival notification to be sent to UE, the base station receives the first paging message sent by the MME, where the first paging message carries coverage enhancement level information, for paging, of the UE and paging capability information of the UE. The MME may use a UE radio capability for paging in the first paging message to carry newly added paging capability information of the UE, and use assistance data for paging to carry information about the repetition quantity on the PDCCH for paging. It should be noted that the first paging message herein is merely used to distinguish between the paging message and a paging message that is sent by the base station to the UE, and does not impose another limitation on the paging message.

S202: Determine a first paging carrier group corresponding to the first indication, where the first paging carrier group includes a portion of a plurality of paging carriers of the network side device.

In the current technology, in a same cell, all carriers (an anchor carrier and non-anchor carriers) support a same and unique DRX cycle. Therefore, the base station needs to reconfigure a carrier used for paging. A relatively good manner is to group all the non-anchor paging carriers, where different groups of carriers correspond to different paging configurations.

In a possible implementation, paging configurations are sent to the terminal. The paging configurations are used to indicate the first paging carrier group and a first paging configuration parameter of the first paging carrier group. The first paging configuration parameter includes a first default paging cycle DRX cycle.

Specifically, for a latency-sensitive terminal or a non-deep-coverage terminal, the base station needs to reconfigure a portion of paging carriers. Because values of DRX cycles and nB that correspond to paging carriers in different paging lists are different, the base station needs to reconfigure the paging carriers.

Further, the base station needs to configure a new carrier list, a new default DRX cycle value, and a new nB value in a paging control channel (Paging Control Channel, PCCH) configuration of the paging carriers, to support the latency-sensitive paging.

In a possible implementation, the first paging configuration parameter further includes the repetition quantity on the physical downlink control channel PDCCH and a weight value weight corresponding to a paging carrier.

Because the two parameters, namely, the repetition quantity on the PDCCH and the weight value weight corresponding to the paging carrier may use previous default configurations, the base station may choose not to configure the two parameters. Certainly, the base station may alternatively reconfigure the repetition quantity on the PDCCH and the weight value weight corresponding to the paging carrier if a new default DRX cycle and a new nB value are configured. The two parameters are mainly used for subsequent obtaining a paging carrier through calculation.

In a possible implementation, the paging configurations are further used to indicate a second paging carrier group and a second paging configuration parameter of the second paging carrier group, the second paging carrier group includes another portion of the plurality of carriers of the network side device, and the second paging configuration parameter includes a second DRX cycle.

Specifically, the base station configures paging configuration parameters of two paging carrier groups, and sends the configured paging configuration parameters to the UE by using system information or sends the paging configuration parameters to the UE in a broadcast mode. It should be noted that the paging configuration parameters of the two paging carrier groups may be sent to the UE by using a system message, or may be sent to the UE by using different system messages. Either of the two groups of paging carrier groups is used to support latency-sensitive paging. Therefore, a DRX cycle corresponding to the group is smaller. The other group is used to support latency-insensitive paging. Therefore, a DRX cycle corresponding to the group is larger. After receiving the paging configuration parameters sent by the base station, the UE selects a corresponding paging configuration parameter based on a service condition of the UE or depending on whether the UE supports the latency-sensitive paging.

S203: Page the terminal on the paging carrier in the first paging carrier group.

Specifically, after determining a paging carrier group corresponding to the UE, the base station selects a paging carrier from the determined paging carrier group to perform paging. The base station obtains, through calculation by using a specific algorithm formula, the paging carrier used for paging from the determined paging carrier group. For different systems, specific calculation methods are different.

It should be noted that, after executing the foregoing algorithm formula, the base station can select a unique paging carrier from the determined paging carrier group to perform paging. The UE obtains a same paging carrier by using a same calculation method, and receives, on the paging carrier, a paging message sent by the base station. Generally, after the base station and the UE obtain the same paging carrier through calculation, the base station and the UE always send and receive the paging message by using the paging carrier. However, in each paging process, the base station and the UE perform calculation again by using the same calculation method.

During implementation of this embodiment of this application, the base station groups the paging carriers, and performs specific paging configuration on the different groups of paging carriers, so that different paging cycles in a cell can be supported, and paging requirements of both short-latency UE and deep-coverage UE are satisfied.

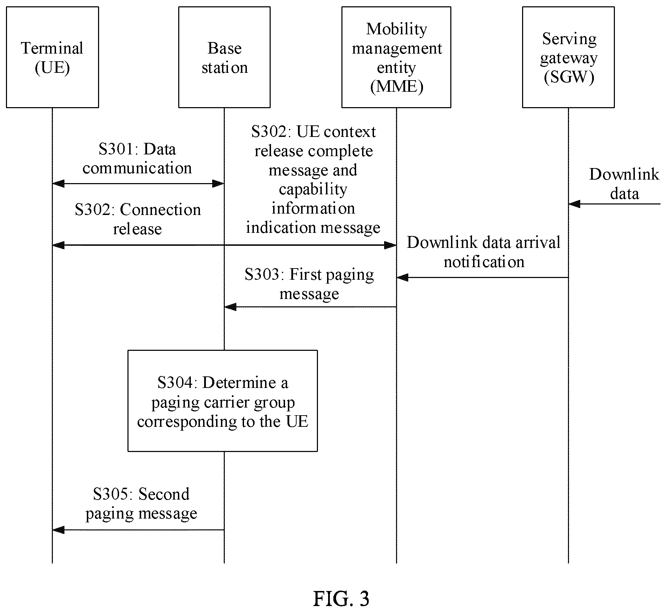

FIG. 3 is a schematic flowchart of another paging message transmission method according to an embodiment of this application. The method includes but is not limited to the following steps.

S301: UE performs data communication with a base station.

Specifically, the UE performs data communication with the base station after establishing a radio resource control (Radio Resource Control, RRC) connection. A communication process includes an exchange process of non-access stratum (Non-Access Stratum, NAS) signaling such as attach/TAU signaling or a data transmission process. The UE may send a UE capability message (UE capability information) to the base station, where the UE capability message carries paging capability information of the UE. The paging capability information includes category information of the UE, a multi-carrier paging support capability of the UE, and the like.

Further, the UE adds, to a paging capability of the UE, capability information indicating whether latency-sensitive paging is supported. In addition, when the UE performs data communication with the base station, the UE reports, to the base station based on a service requirement of the UE, whether the UE supports the latency-sensitive paging. That is, the UE adds a configuration for supporting the latency-sensitive paging to the paging capability information reported by the UE. Details are as follows:

[[LatencysensitivePaging-r16     ENUMERATED {true}     OPTIONAL

]]

Or

[[enhpaging-r16     ENUMERATED {true}     OPTIONAL

]]

A name of an information element that supports the latency-sensitive paging may be LatencysensitivePaging-r16 or other EnhPaging-r16. Herein, it is assumed that such paging enhancement is performed in R16. Therefore, R16 is added to an end of a name of each information element. If the technology is implemented in another version, the another version is added to the end of the information element as a suffix. A specific version to be used is not limited in this application. Through the foregoing configuration, the base station can learn of, based on the paging capability information of the UE, whether the UE supports the latency-sensitive paging.

After the data communication ends, the base station sends a connection release message to the UE. After receiving the connection release message, the UE releases the RRC connection, and the UE enters an RRC idle mode from an RRC connected mode.

S302: The base station sends a UE context release complete message and a UE capability information indication message to an MME.

Specifically, after the data communication between the UE and the base station ends, the base station sends a UE context release complete message to the MME. The base station obtains the paging capability information of the UE and paging coverage information in the process of performing data communication with the UE, the paging coverage information is a repetition quantity on a physical downlink control channel (Physical Downlink Control Channel, PDCCH) on which the UE receives paging, for deep-coverage UE, the repetition quantity on the PDCCH for receiving the paging is large, and for non-deep-coverage UE, the repetition quantity on the PDCCH for receiving the paging is smaller. Therefore, the base station provides coverage enhancement level information of paging for the UE by sending a context release message to the MME. After receiving the coverage enhancement level information, the MME stores the coverage enhancement level information. The base station provides the paging capability information of the UE by sending a UE capability information indication message (UE capability info indication) to the MME. The paging capability information of the UE is a paging message receiving capability of the UE, and includes any information such as a category of the UE, whether the UE supports multi-carrier paging, and a frequency band for the multi-carrier paging. The UE may use the paging capability information of the UE to carry the paging capability of the UE. The capability may be a radio paging capability of the UE in the standard. After receiving the UE capability information indication message, the MME stores the paging capability of the UE.

S303: After the MME obtains a downlink data arrival notification from an SGW, the MME sends a first paging message to the base station.

Specifically, after the MME obtains, from the SGW, the downlink data arrival notification to be sent to UE, the MME sends the first paging message to the base station, where the first paging message carries the coverage enhancement level information of the UE and paging capability-related information of the UE. The MME may use a UE radio capability for paging in the first paging message to carry newly added paging capability information of the UE, and use assistance data for paging to carry the coverage enhancement level information of the UE (information about the repetition quantity on the PDCCH for paging). It should be noted that the first paging message herein is merely used to distinguish between the paging message and a paging message that is sent by the base station to the UE, and does not impose another limitation on the paging message.

It should be noted that there is no logical relationship between step S302 and step S303 in terms of time. To be specific, step S303 does not need to be performed immediately after step S302, and step S303 may be performed after a period of time, to be specific, after the MME obtains the downlink data arrival notification from the SGW.

S304: The base station determines, based on the paging capability-related information of the UE, a paging carrier group corresponding to the UE.

Specifically, to expand a paging capacity, a maximum of 16 carriers are supported in an NB-IoT, where one of the 16 carriers is an anchor carrier, and the others are non-anchor carriers. Both the anchor carrier and the non-anchor carriers may be used for paging.

In the current technology, in a same cell, all carriers (an anchor carrier and non-anchor carriers) support a same and unique DRX cycle. Therefore, the base station needs to reconfigure a carrier used for paging. A relatively good manner is to group all the non-anchor paging carriers, where different groups of carriers correspond to different paging configurations.

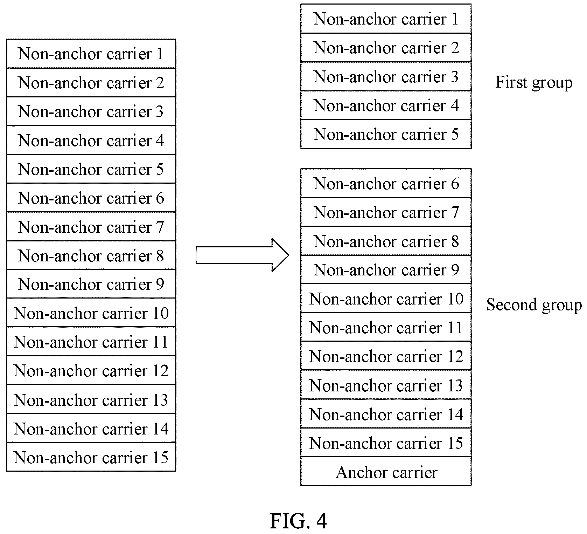

Specifically, as shown in FIG. 4, for a latency-sensitive terminal or a non-deep-coverage terminal, the base station needs to reconfigure a portion of paging carriers. The base station divides all the non-anchor paging carriers into two groups. An upper group (a group of fewer paging carriers) needs to be reconfigured. A remaining group and the anchor carrier still use an original configuration, and a DRX cycle corresponding to the remaining group and the anchor carrier is still a previous default DRX cycle of the base station.

Further, the base station needs to configure a new paging carrier list, a new default DRX cycle value, a quantity (nB) of paging cycles, the repetition quantity on the PDCCH, a weight value (weight) corresponding to a paging carrier, and the like in a paging control channel (Paging Control Channel, PCCH) configuration of the paging carriers. For the PCCH configuration, a configuration modification on a system information block 2 (System Information Block, SIB 2) and a SIB 22 is used as an example for specific description.

The following configuration is added to a PCCH configuration of the SIB 22:

```
SystemInformationBlockType22-NB-r16 ::=   SEQUENCE {

    dl-ConfigList-r16               DL-ConfigCommonList-NB-r16      OPTIONAL,  -- Need OR

    pcch-Config-r16                 PCCH-Config-NB-r16             OPTIONAL, -- Need OR

    lateNonCriticalExtension    OCTET STRING                      OPTIONAL,

        ...

    }

    DL-ConfigCommonList-NB-r16 ::=         SEQUENCE (SIZE (1.. maxNonAnchorCarriers-NB-r14))
OF

                                                DL-ConfigCommon-NB-r14

    PCCH-Config-NB-r16 ::=                  SEQUENCE {

        defaultPagingCycle-r16              ENUMERATED {rf128, rf256, rf512, rf1024},

        nB-r16                              ENUMERATED {

                                            fourT, twoT, oneT, halfT, quarterT, one8thT,

                                            one16thT, one32ndT, one64thT,

                                            one128thT, one256thT, one512thT, one1024thT,

                                            spare3, spare2, spare1},

        }
```

r16 and r14 represent different versions. Expressions of other versions are similar. It can be learned from the foregoing configuration that, a configuration SIZE (1.. maxNonAnchorCarriers-NB-r14) of a list of paging carriers supporting the latency-sensitive paging is added to a PCCH configuration in R16, the configuration SIZE (1.. maxNonAnchorCarriers-NB-r14) indicates that the new carrier list may include a maximum of 15 non-anchor paging carriers or any combination thereof, and a configuration {rf128, rf256, rf512, rf1024} of a default paging DRX cycle corresponding to a terminal that supports the latency-sensitive paging is added, where rf128 corresponds to 128 system frames, rf256 corresponds to 256 system frames, and the rest may be deduced by analogy. A time length of each system frame is 10 milliseconds. The base station may select any one of the four values as the default DRX cycle. For a carrier that supports the latency-sensitive paging, the base station usually selects a relatively small value as the default DRX cycle. An nB configuration {fourT, twoT, halfT, one8thT, ..., one1024thT} is added, and nB is mainly used to deduce a paging frame (Paging Frame, PF) and a paging occasion (Paging Occasion, PO), where twoT corresponds to 2*T, one8thT corresponds to 1/8*T, and the rest may be deduced by analogy. In addition, an existing configuration in R14 is reused for a downlink paging carrier that supports the latency-sensitive (latency-insensitive) paging. The configuration includes a paging carrier list, a repetition quantity on a PDCCH on each paging carrier, a weight value corresponding to each paging carrier, and the like.

It can be learned that, through the foregoing specific configuration, paging parameters such as a default DRX cycle and nB of a portion of paging carriers may be reconfigured to satisfy a requirement of supporting the latency-sensitive paging.

In addition to the foregoing configuration manner, another configuration manner may also be used. For example, a latency-sensitive DRX configuration is added to an existing PCCH configuration of the SIB 2 in R13, and is specifically as follows:

RadioResourceConfigCommonSIB-NB-r13 ::=     SEQUENCE {

    rach-ConfigCommon-r13                    RACH-ConfigCommon-NB-r13,

    bcch-Config-r13                          BCCH-Config-NB-r13,

    pcch-Config-r16                          PCCH-Config-NB-r13, OPTIONAL,     --          Cond

latencysensitive

    nprach-Config-r13                        NPRACH-ConfigSIB-NB-r13,

    ...

    ]]

    }

The following configuration is added to the PCCH configuration of the SIB 22:

SystemInformationBlockType22-NB-r16 ::=   SEQUENCE {

    dl-ConfigList-r16                        DL-ConfigCommonList-NB-r16      OPTIONAL, -- Need OR

  pcch-Config-r16                          PCCH-Config-NB-r16             OPTIONAL, -- Need OR

    lateNonCriticalExtension     OCTET STRING                   OPTIONAL,

    ...

    }

    DL-ConfigCommonList-NB-r16 ::=           SEQUENCE (SIZE (1.. maxNonAnchorCarriers-NB-r14))

OF DL-ConfigCommon-NB-r14

A difference between such a configuration manner and the foregoing configuration manner lies in that an enabling condition "latencysensitive" is added based on quotation of the existing PCCH configuration of the SIB 2 in R13, and the configuration SIZE (1.. maxNonAnchorCarriers-NB-r14) of the list of the corresponding paging carriers supporting the latency-sensitive paging is added to the PCCH configuration of the SIB 22, if a terminal is latency-sensitive, the configuration needs to be selected. It should be noted that once the enabling condition is determined, the enabling condition cannot be modified, and cannot be dynamically reconfigured.

After performing the foregoing configuration, the base station sends corresponding configuration information to the UE in a manner such as system information broadcast. In addition, after receiving the paging capability-related information, sent by the MME, of the UE, the base station may determine the paging carrier group corresponding to the UE. For example, the base station divides all paging carriers into two groups. A first group is not changed, and an original configuration parameter and the like still remain unchanged. A DRX cycle corresponding to the first group is larger. A second group is reconfigured to support the latency-sensitive paging. A DRX cycle corresponding to the second group is smaller. After receiving the paging capability-related information, sent by the MME, of the UE, if the base station finds that the UE supports the latency-sensitive paging, the base station determines to select the second group of paging carriers to page the UE.

It may be understood that, different carriers on which paging is performed are allocated to the UE in a latency-based (to be specific, whether the UE supports the latency-sensitive paging) allocation manner. Certainly, different carriers on which paging is performed may alternatively be allocated to the UE based on a coverage requirement of the terminal. A specific allocation manner is similar to the latency-based allocation manner. A difference is that in PCCH-config-r16, a condition of the IE is NonDeepCoverage. In addition, in the paging capability information of the UE, the name of the IE may be NonDeepCoveragePaging-r16. If the technology is implemented in another version, another version is added to the end of the information element as a suffix. A specific version to be used is not limited in this application. In addition, other specific configurations are completely the same as a latency-based configuration. Details are not described herein again.

It should be noted that, the configuration modification on the SIB2 and the SIB22 is merely an example for description. Certainly, other SIBs may alternatively be used for specific configuration. In addition, in this embodiment, the paging carriers are divided into only two paging carrier groups and corresponding configuration is performed. Certainly, the paging carriers may alternatively be divided into a plurality of groups, and corresponding configuration is performed. This is not limited in this application.

It can be learned that the base station groups the paging carriers, and reconfigures the different groups of paging carriers, so that the base station can determine, based on the paging capability information corresponding to the UE, the paging carrier group corresponding to the UE, to support different paging cycles in a cell, and satisfy paging requirements of both short-latency UE and deep-coverage UE.

S305: The base station selects a first paging carrier to send a second paging message to the UE.

Specifically, after determining the paging carrier group corresponding to the UE, the base station selects a paging carrier from the determined paging carrier group to perform paging.

The base station needs to obtain, through calculation, the carrier used for paging from the determined paging carrier group by using a specific algorithm. For different systems, specific calculation methods of the base station are different. For an NB-IoT system, a corresponding paging carrier may be obtained through calculation by using a formula (1). The formula (1) is as follows:

$$\text{floor}(UE\_ID/(N*Ns)) \bmod \sum_{(j=0)}^{(j=(maxPagingCarriers-1))} [[[Weight[j] < \sum_{(k=0)}^{(k=(n-1))}][Weight[k]]]$$

T represents a paging cycle of the UE, namely, a default DRX cycle of the base station. The DRX cycle is a value selected from {rf128, rf256, rf512, rf1024}. The value of the paging cycle is provided in a system message. In a case of paging enhancement (assuming that paging enhancement is performed in R16), the cycle value is provided in PCCH-Config-NB-r16. nB indicates the number of paging cycles. Actually, nB indicates the number of POs in each DRX cycle. A value of nB is provided in the system information. In the case of paging enhancement (assuming that paging enhancement is performed in R16), the value of nB is provided in the PCCH-Config-NB-r16. The value of nB may be 4T, 2T, T, T/2, T/4, T/8, T/16, T/32, T/64, T/128, T/256. For the NB-IoT system, the value of the nB may alternatively be T/512 or T/1024. N indicates a smaller value between T and nB. Actually, N indicates a quantity of PFs included in each DRX cycle. Ns indicates a larger value between 1 and nB/T. Actually, Ns indicates a quantity of POs included in each PF. UE_ID = IMSI mod 16384. IMSI indicates an international mobile subscriber identity. Mod indicates a modulo operation. To be specific, UE_ID indicates a remainder of the IMSI divided by 16384. MaxPagingCarriers indicates a quantity of non-anchor carriers supporting a paging function on the base station. In the case of paging enhancement (assuming that paging enhancement is performed in R16), the quantity of non-anchor carriers is a quantity indicated in the IE in r16, for example, a quantity of carriers in dl-ConfigList-r16. Weight (i) indicates a weight of paging i. In the case of paging enhancement (assuming that paging enhancement is performed in R16), the paging weight is a weight indicated in the IE in r16, for example, a weight of each carrier configured in dl-ConfigList-r16.

For an MTC system, a corresponding paging carrier may be obtained through calculation by using a formula (2). The formula (2) is shown as follows:

$$PNB = \text{floor}\ (UE\_ID/\ (N*Ns)) \bmod Nn$$

Nn indicates a quantity of non-anchor carriers supporting a paging function on the base station. In a case of paging enhancement (assuming that paging enhancement is performed in R16), the quantity of non-anchor carriers is a quantity indicated in the IE in r16, for example, a quantity of carriers in dl-ConfigList-r16. Meanings indicated by other parameter symbols are completely consistent with those in the NB-IoT system. Details are not described herein again.

It may be understood that the base station can select, by executing the foregoing algorithm, a unique paging carrier from the determined paging carrier group to perform paging. Herein, to distinguish between the carrier and another carrier in the paging carrier group, the first paging carrier is used to highlight that the carrier is obtained by the base station through calculation and is used to page UE. It should be understood that this is not limited in this application.

After selecting the paging carrier, the base station sends the second paging message to the terminal. The terminal obtains a related paging configuration from a system message sent by the base station, obtains a corresponding configuration parameter from the paging configuration, obtains a corresponding paging carrier through calculation based on a same algorithm and the configuration parameter, and receives the second paging message sent by the base station on the paging carrier. It may be understood that the paging carrier obtained by the UE through calculation should be consistent with the paging carrier obtained by the base station through calculation. The second paging message herein is merely used to distinguish between the paging message and a paging message that is sent by a core network device to the base station, and does not impose another limitation on the paging message.

It should be noted that the base station first sends a broadcast message to the UE, where the broadcast message includes configuration information included in the SIB 22. After reading the broadcast message, the UE determines, based on the configuration information in the broadcast message and a DRX cycle of the UE, that the UE wakes up on a PO corresponding to a corresponding PF, to monitor a PDCCH scrambled by using a P-RNTI. If the UE detects the PDCCH scrambled by using the P-RNTI on the PO, the UE reads each paging record in a paging record list, where the paging record includes an identity UE-Identity of paged UE. If the UE finds that the UE identity of the UE is consistent with a UE-identity, the UE sends the UE-identity and a cn-domain to an upper layer for further processing. If the UE does not find a UE-identity consistent with the UE identity of the UE, the UE discards a received paging message, and enters a hibernation mode to reduce power consumption.

Further, after the UE and the core network device determine the DRX cycle of the UE through negotiation on a NAS layer, the core network device stores the DRX cycle of the UE. When delivering a paging message, the core network device uses the first paging message to carry information such as the DRX cycle of the UE and the identity of the UE, and delivers the information to the base station. The base station calculates the PF and the PO of the UE based on the information, and sends a paging message on the corresponding PO. The UE also calculates the PF and the PO based on the information such as the DRX cycle of the UE and the identity of the UE, and receives, on the corresponding PO, the paging message sent by the base station. It should be noted that the PF and the PO that are obtained by the UE through calculation are the same as the PF and the PO that are obtained by the base station through calculation. The paging message can be accurately sent and received only in this way. Specifically, the PF is a system frame that satisfies a formula (3) of the base station. The formula (3) is:

$$SFN mod T = (T div N) * (UE\_ID mod N).$$

PO may be obtained through table lookup by using an index (i_s), where i_s satisfies a formula (4). The formula (4) is:

$$i\_s = floor(UE\_ID/N) mod Ns$$

where SFN indicates a system frame number (System Frame Number), T represents the default DRX cycle of the base station, N indicates the smaller value between T and nB, and actually represents the quantity of PFs included in each DRX cycle, and UE_ID indicates the IMSI mod 1024. It can be learned that TdivN is equivalent to a quantity of system frames included in each of N portions obtained by equally dividing a DRX cycle. UE_IDmodN is equivalent to taking an $i^{th}$ portion in the N equal portions, where a value of i ranges from 0 to N-1, and PF is the first system frame in the $i^{th}$ portion.

For specific UE, a PF is a system frame used to send a paging message, and a PO is a subframe that is in the PF and that is used to send a paging message. It can be learned that TdivN is equivalent to a quantity of system frames included in each of N portions obtained by equally dividing a DRX cycle. UE_IDmodN is equivalent to taking an $i^{th}$ portion in the N equal portions, where a value of i ranges from 0 to N-1, and PF is the first system frame in the $i^{th}$ portion.

During implementation of this embodiment of this application, the base station groups the paging carriers, and performs specific paging configuration on the different groups of carriers, so that different paging cycles in a cell can be supported, and paging requirements of both short-latency UE and deep-coverage UE are satisfied.

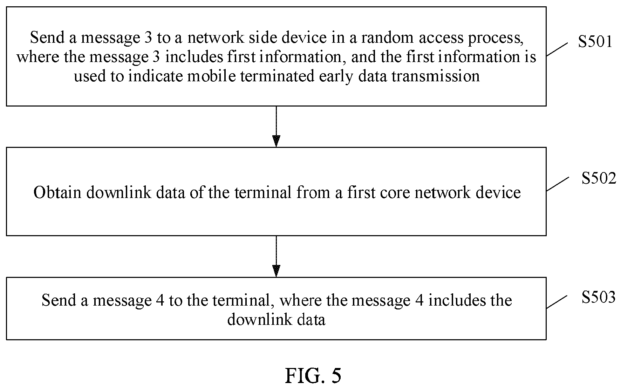

FIG. 5 is a schematic flowchart of a downlink data transmission method according to an embodiment of this application. The method includes but is not limited to the following steps.

S501: Receive a message 3 from a terminal in a random access process, where the message 3 includes first information, and the first information is used to indicate mobile terminated early data transmission.

Specifically, before a base station receives a first RRC message sent by UE, an application server generates downlink data that the UE needs to obtain, and sends the downlink data to a PDN gateway (PDN GateWay, PGW). Then, the PGW sends the downlink data to an SGW. After receiving the downlink data sent by the PGW, the SGW sends a data arrival notification to an MME.

After receiving a second paging message sent by the base station, the UE sends a random access preamble (preamble) to the base station, receives random access response information sent by the base station, and then, sends the message 3 (the first RRC message) to the base station.

In a possible implementation, the first information is an identity of the terminal, and there is an association relationship between the identity of the terminal and the mobile terminated early data transmission; the first information is a cause value of the message 3; the first information is capability information or category information of the terminal; or the first information is information used to request the mobile terminated early data transmission.

Specifically, the UE sends an RRC connection request message, an RRC early data transmission request message, or an RRC connection resume request message to the base station, and the RRC connection request message, the RRC early data transmission request message, or the RRC connection resume request message may include the MT EDT indication information and an identity of the UE.

In a possible implementation, the obtaining mobile terminated early data transmission indication information of the terminal includes: receiving a first paging message sent by the core network device, where the first paging message includes mobile terminated early data transmission indication information and an identity of a paged terminal; comparing the identity of the terminal in the first paging message with the identity of the terminal in the first RRC message; and obtaining the mobile terminated early data transmission indication information in the first paging message if the identities are consistent; or if the first RRC message includes mobile terminated early data transmission indication information, obtaining the mobile terminated early data transmission indication information in the first RRC message.

Specifically, after receiving the data arrival notification sent by the SGW, the MME sends the first paging message to the base station, where the first paging message includes paging capability information of the UE and the identity of the UE. The paging capability information is sent to the MME by the base station when the base station sends a UE capability information indication message to the MME during previous data communication between the base station and the UE. The MME stores the paging capability information, and uses, when paging is performed next time, the first paging message to be sent to the base station to carry the paging capability information.

Further, the paging capability information sent by the MME to the base station may carry the mobile terminated early data transmission (Mobile Terminated Early Data Transmission, MT EDT) indication information of the UE, where the MT EDT indication information indicates that the UE has a capability of supporting MT EDT. After receiving the first paging message, the base station further needs to store the identity of the UE in the paging message. The identity of the UE may be usually an S-TMSI of the UE. If the S-TMSI of the UE is unavailable, the identity of the UE may alternatively be an IMSI, a GUTI, or an IMEI. This is not limited in this application.

After receiving the first paging message, the base station compares the identity of the terminal in the first paging message with the identity of the terminal in the first RRC message received from the UE. If the identities are consistent, the base station obtains the mobile terminated early data transmission indication information in the first paging message. Certainly, the base station may alternatively obtain the mobile terminated early data transmission indication information from the first RRC message sent by the UE.

In a possible implementation, that the first RRC message includes mobile terminated early data transmission indication information includes: The first RRC message includes a mobile terminated early data transmission indication bit; or the first RRC message includes an access cause value, where the access cause value is mobile terminated access.

In a possible implementation, if the first RRC message is the RRC connection request message or the RRC connection resume request message, the mobile terminated early data transmission indication information is the mobile terminated early data transmission indication bit; or if the first RRC message is the RRC early data transmission request message, the mobile terminated early data transmission indication information is the mobile terminated early data transmission indication bit or the access cause value, where the access cause value is the mobile terminated access.

Specifically, the UE sends the RRC connection request message, the RRC early data transmission request message, or the RRC connection resume request message to the base station, and the RRC connection request message, the RRC early data transmission request message, or the RRC connection resume request message may include the MT EDT indication information and the identity of the UE.

Further, the MT EDT indication information may be 1-bit related information, carried in the RRC connection request message or the RRC connection resume request message, of the MT EDT that the UE needs to initiate. The related information may be a capability indication of the MT EDT, or may be a service request of the MT EDT. The MT EDT indication information may alternatively be the access cause value in the RRC early data transmission request message, where the access cause value is the mobile terminated access. For example, the access cause value in the RRC early data transmission request message is set to mt-Access. It should be noted that, the RRC early data transmission request message may alternatively carry 1-bit related information of the MT EDT that the UE needs to initiate, and the RRC early data transmission request message sent by the UE may further include a NAS PDU of a service request initiated by the UE.

It should be noted that, if the base station has obtained the MT EDT indication information from the first paging message sent by the MME, the UE may not use the RRC connection request message or the RRC connection resume request message that is to be sent to carry the 1-bit MT EDT-related capability information.

S502: Obtain downlink data of the terminal from a first core network device.

In a possible implementation, the obtaining downlink data of the terminal from a first core network device includes: sending second information to the first core network device, where the second information is used to indicate the mobile terminated early data transmission of the terminal; and receiving the downlink data of the terminal from the first core network device.

Specifically, after receiving the RRC connection request message, the RRC early data transmission request message, or the RRC connection resume request message that is sent by the UE, the base station compares the identity of the UE in the RRC connection request message, the RRC early data transmission request message, or the RRC connection resume request message with the identity of the UE in the first paging message received from the MME. If the identities of the UE are consistent, it indicates that the UE has responded to the paging message sent from the MME, and the base station sends an initial UE message to the MME. It may be understood that the base station needs to deliver a large quantity of paging messages at any time, and also receives a large quantity of RRC connection request messages, RRC early data transmission request messages, or RRC connection resume request messages. The UE cannot accurately distinguish, in time, which one of an RRC connection request message, an RRC early data transmission request message, or an RRC connection resume request message is used to respond to the paging message sent by the MME. Therefore, the base station needs to compare identities of the UE in the received RRC connection request messages, RRC early data transmission request message, or RRC connection resume request messages with the identity of the UE in the first paging message received from the MME to determine whether the identities are consistent, to determine whether the UE has responded to the paging message sent from the MME.

Further, the initial UE message sent by the base station to the MME carries related information of the MT EDT of the UE. The related information of the MT EDT may be the 1-bit MT EDT indication message or the cause value mt-Access, where the cause value is the cause value in the RRC early data transmission request message, or an optional serving NAS PDU included in the initial UE message.

Before the base station receives data in downlink early data transmission that is sent by the MME, the MME sends a paging acknowledgement message to the SGW.

Specifically, the paging acknowledgement message may be sent to the SGW by the MME after the MME receives the initial UE message sent by the base station, or may be sent to the SGW by the MME before the MME receives the initial UE message sent by the base station.

Specifically, if the data in the downlink early data transmission is control plane data, optionally, the MME sends a bearer modification message to the SGW. The SGW delivers the data in the downlink early data transmission by using a modified bearer resource. After receiving the data in the downlink early data transmission, the MME sends a downlink message to the base station, where the downlink message includes the data in the downlink early data transmission.

Specifically, after receiving the data in the downlink early data transmission that is sent by the SGW, the MME determines a quantity of downlink data packets that need to be delivered. If there is only one downlink data packet, the MME sends a downlink message to the base station, and uses the downlink message to carry the data in the downlink early data transmission in the downlink data packet. Specially, the MME may send the data in the downlink early data transmission to the base station via a NAS PDU. When there is more than one downlink data packet, the MME sends another downlink message to the base station, and indicates, by using the downlink message, the base station to send an RRC connection establishment request message or an RRC connection resume request message to the UE, so that the UE obtains downlink data after establishing an RRC connection.

In a possible implementation, the obtaining downlink data of the terminal from a first core network device includes: sending the second information to a second core network device, where the second information is used to indicate the mobile terminated early data transmission of the terminal; establishing a data bearer of the terminal with the first core network device; and receiving the downlink data of the terminal from the first core network device over the data bearer.

Specifically, if the data in the downlink early data transmission is user plane data, optionally, the MME sends the bearer modification message to the SGW. The SGW delivers the data in the downlink early data transmission to the base station by using the modified bearer resource. The MME sends a context resume message to the base station.

Specifically, after the base station receives the context resume message sent by the MME, the base station sets an inactivity timer to determine whether the data in the downlink early data transmission arrives. If the base station does not receive, after the inactivity timer expires, the data in the downlink early data transmission that is sent by the SGW, the base station initiates a connection release message, to release an air interface connection between the base station and the UE.

If the base station receives the data in the downlink early data transmission from the SGW before the inactivity timer expires, the base station sends the received data in downlink early data transmission to the UE, and then initiates a connection release message, to release an air interface connection between the base station and the UE.

In a possible implementation, a network side device receives a first message from the second core network device, where the first message is used to indicate to resume a context of the terminal.

S503: Send a message 4 to the terminal, where the message 4 includes the downlink data.

During implementation of this embodiment of this application, when the UE has the capability of supporting the MT EDT, the base station can obtain the MT EDT indication information from a UE side or an MME side, thereby obtaining the capability of supporting the MT EDT by the UE. Then, the base station obtains, in advance by using the MME, the data in the downlink early data transmission that is sent from the SGW, or the base station directly obtains the data in the downlink early data transmission from the SGW in advance, and sends the data in the downlink early data transmission to the UE, so that the UE does not need to establish the RRC connection, and does not need to send an RRC connection establishment complete message or an RRC connection resume complete message to the base station, so that signaling overheads are reduced, a latency of downlink data arriving at the UE is reduced.

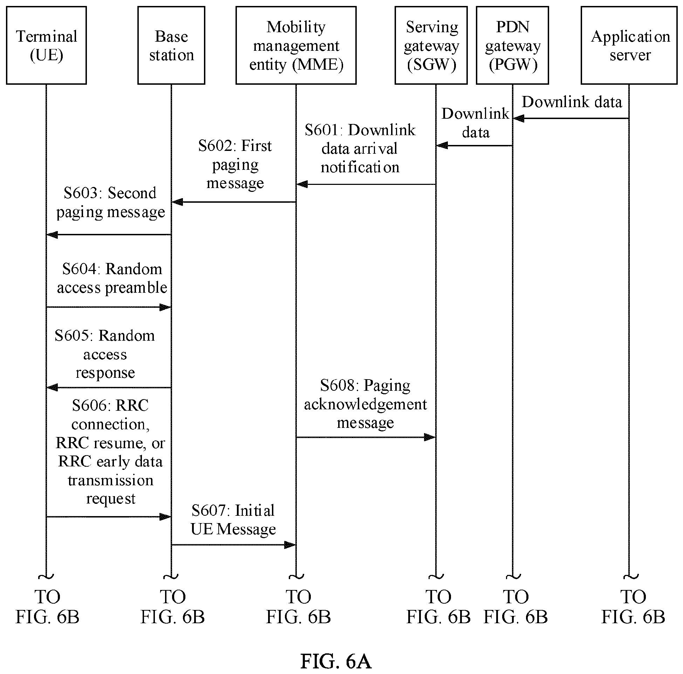

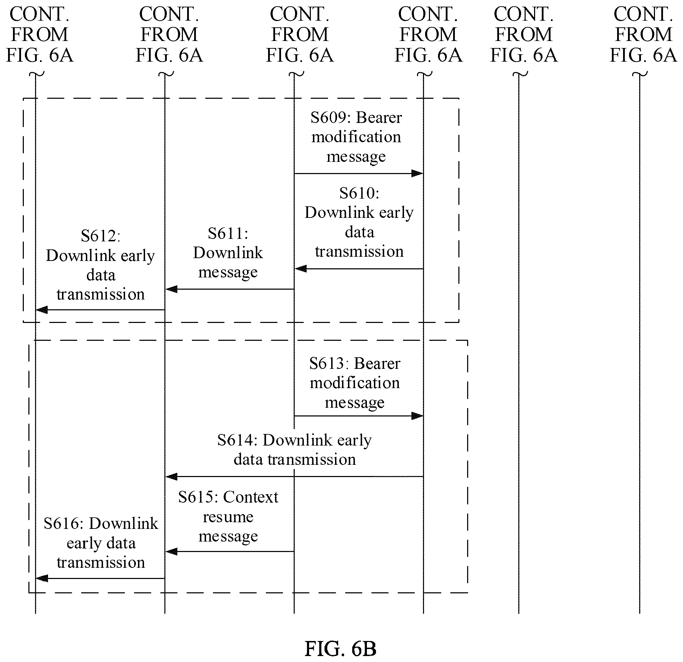

FIG. 6A and FIG. 6B are a schematic flowchart of another paging message transmission method according to an embodiment of this application. The method includes but is not limited to the following steps.

S601: An SGW sends a data arrival notification to an MME.

Specifically, an application server generates downlink data that UE needs to obtain, and sends the downlink data to a PDN gateway (PDN GateWay, PGW). Then, the PGW sends the downlink data to an SGW. After receiving the downlink data sent by the PGW, the SGW sends the data arrival notification to the MME.

It should be noted that the SGW and the PGW may be disposed separately, or may be disposed together. In addition, both interface messages between the SGW and a base station and between the SGW and the PGW need to comply with a GPRS tunneling protocol (GPRS Turning Protocol, GTP) protocol.

S602: The MME sends a first paging message to the base station.

Specifically, after receiving the data arrival notification sent by the SGW, the MME sends the first paging message to the base station, where the first paging message includes paging capability information of the UE and an identity of the UE. The paging capability information is sent to the MME by the base station when the base station sends a UE capability information indication message to the MME during previous data communication between the base station and the UE. The MME stores the paging capability information, and uses, when paging is performed next time, the first paging message to be sent to the base station to carry the paging capability information. It should be noted that the first paging message herein is merely used to distinguish between the paging message and a paging message that is sent by the base station to the UE, and does not impose another limitation on the paging message.

Further, the paging capability information sent by the MME to the base station may carry MT EDT indication information of the UE, where the MT EDT indication information indicates that the UE has a capability of supporting MT EDT. After receiving the first paging message, the base station may obtain the MT EDT indication information by using the paging capability information in the first paging message.

After receiving the first paging message, the base station further needs to store the identity of the UE in the paging message. The identity of the UE may be usually an S-TMSI (S-Temporary Mobile Subscriber Identity) of the UE. If the S-TMSI of the UE is unavailable, the identity of the UE may alternatively be an IMSI, a GUTI, or an IMEI. This is not limited in this application.

S603: The base station sends a second paging message to the UE.

Specifically, the base station sends the second paging message to the UE, and the second paging message includes an identity of paged UE. The identity of the UE is obtained by the base station from the first paging message, and may be an S-TMSI, an IMSI, a GUTI, or an IMEI. It should be noted that the second paging message herein is merely used to distinguish between the paging message and the paging message that is sent by the MME to the base station, and does not impose another limitation on the paging message.

Further, after receiving the first paging message, the base station may determine, based on the paging capability information in the first paging message, a paging carrier group corresponding to the UE, where the paging capability information may include capability information indicating whether latency-sensitive paging is supported. After the base station determines the paging carrier group, the base station obtains a paging carrier from the determined paging carrier group through calculation by using a specific formula, and sends the second paging message to the UE by using the paging carrier. Certainly, the base station previously needs to group carriers used for paging, and different groups of carriers correspond to different paging configurations. For example, a PCCH configuration of an SIB 22 is modified, and configurations of a DRX cycle and nB that correspond to latency-sensitive UE or non-deep-coverage UE are added. In this way, the PCCH configuration can satisfy a short-latency requirement.

The base station calculates a PF and a PO of the UE by using information such as a DRX cycle and the identity of the UE, and sends the second paging message to the UE on the corresponding PO.

S604: The UE sends a preamble to the base station.

Specifically, the UE first receives a broadcast message sent by the base station, where the broadcast message includes configuration information of the base station for the paging carrier. After reading the broadcast message, the UE obtains, through calculation based on the configuration information in the broadcast message and the DRX cycle of the UE by using a calculation formula that is the same as that used by the base station, a carrier for receiving a paging message, and then calculates the PF and PO based on the information such as the DRX cycle and the identity of the UE. The PF and PO that are obtained by the UE through calculation are the same as those obtained by the base station through calculation. After the UE receives, on the corresponding PO, the second paging message sent by the base station, the UE determines whether the identity of the UE in the paging message is the UE identity of the UE. If the identity of the UE in the paging message is consistent with the UE identity of the UE, when the UE determines that the UE is paged, the UE selects a non-enhanced (legacy) physical random access channel resource PRACH to initiate random access, and sends the preamble to the base station. It should be noted that the legacy PRACH is different from a PRACH that is specially reserved by a system for EDT data transmission, and is also different from another dedicated PRACH.

S605: The base station sends random access response information to the UE.

S606: The UE sends an RRC connection request message, an RRC early data transmission request message, or an RRC connection resume request message to the base station.

Specifically, the UE sends the RRC connection request message, the RRC early data transmission request message, or the RRC connection resume request message to the base station, and the RRC connection request message, the RRC early data transmission request message, or the RRC connection resume request message may include the MT EDT indication information and the identity of the UE.

Further, the MT EDT indication information may be 1-bit related information, carried in the RRC connection request message or the RRC connection resume request message, of the MT EDT that the UE needs to initiate. The related information may be a capability indication of the MT EDT, or may be a service request of the MT EDT. The MT EDT indication information may alternatively be the access cause value in the RRC early data transmission request message, where the access cause value is the mobile terminated access. For example, the access cause value in the RRC early data transmission request message is set to mt-Access. It should be noted that, the RRC early data transmission request message may alternatively carry 1-bit related information of the MT EDT that the UE needs to initiate, and the RRC early data transmission request message sent by the UE may further include a NAS PDU of a service request initiated by the UE.

It should be noted that, if the base station has obtained the MT EDT indication information from the first paging message sent by the MME, the UE may not use the RRC connection request message or the RRC connection resume request message that is to be sent to carry the 1-bit MT EDT-related capability information.

S607: The base station sends an initial UE message to the MME.

Specifically, after receiving the RRC connection request message, the RRC early data transmission request message, or the RRC connection resume request message that is sent by the UE, the base station compares the identity of the UE in the RRC connection request message, the RRC early data transmission request message, or the RRC connection resume request message with the identity of the UE in the first paging message received from the MME. If the identities of the UE are consistent, it indicates that the UE has responded to the paging message sent from the MME, and the base station sends the initial UE message to the MME. It may be understood that the base station needs to deliver a large quantity of paging messages at any time, and also receives a large quantity of RRC connection request messages, RRC early data transmission request messages, or RRC connection resume request messages. The UE cannot accurately distinguish, in time, which one of an RRC connection request message, an RRC early data transmission request message, or an RRC connection resume request message is used to respond to the paging message sent by the MME. Therefore, the base station needs to compare identities of the UE in the received RRC connection request messages, RRC early data transmission request message, or RRC connection resume request messages with the identity of the UE in the first paging message received from the MME to determine whether the identities are consistent, to determine whether the UE has responded to the paging message sent from the MME.

Further, the initial UE message sent by the base station to the MME carries related information of the MT EDT of the UE. The related information of the MT EDT may be the 1-bit MT EDT indication message or the cause value mt-Access, where the cause value is the cause value in the RRC early data transmission request message, or an optional serving NAS PDU included in the initial UE message.

S608: The MME sends a paging acknowledgement message to the SGW.

Specifically, the paging acknowledgement message may be sent to the SGW by the MME after the MME receives the initial UE message sent by the base station, or may be sent to the SGW by the MME before the MME receives the initial UE message sent by the base station.

Optionally, if data in downlink early data transmission that the UE needs to obtain is control plane data, the following needs to be performed.

S609: The MME sends a bearer modification message to the SGW.

Specifically, after receiving the bearer modification message sent by the MME, the SGW modifies a bearer resource based on the bearer modification message, and delivers the data in the downlink early data transmission by using the modified bearer resource. It should be noted that step S609 is optional. Certainly, step S609 may not be performed either.

S610: The SGW sends the data in the downlink early data transmission to the MME.

Specifically, after the SGW receives the initial UE message or the bearer modification message that is sent by the MME, the SGW sends the data in the downlink early data transmission to the MME.

S611: The MME sends a downlink message to the base station.

Specifically, after receiving the data in the downlink early data transmission that is sent by the SGW, the MME determines a quantity of downlink data packets that need to be delivered. If there is only one downlink data packet, the MME sends a downlink message to the base station, and uses the downlink message to carry the data in the downlink early data transmission in the downlink data packet. Specially, the MME may send the data in the downlink early data transmission to the base station via a NAS PDU. When there is more than one downlink data packet, the MME sends another downlink message to the base station, and indicates, by using the downlink message, the base station to send an RRC connection establishment request message or an RRC connection resume request message to the UE, so that the UE obtains downlink data after establishing an RRC connection.

S612: The base station sends the data in the downlink early data transmission to the UE.

Specifically, after receiving the downlink message sent by the MME, the base station sends the RRC connection establishment request message or the RRC connection resume request message to the UE. If the base station has obtained the data in the downlink early data transmission from the MME, the base station uses the RRC connection establishment request message or the RRC connection resume request message to carry the data in the downlink early data transmission obtained by the base station. The UE receives the RRC connection establishment request message or the RRC connection resume request message, thereby obtaining the data in the downlink early data transmission carried in the RRC connection establishment request message or the RRC connection resume request message. After obtaining the data in the downlink early data transmission, the UE does not need to establish the RRC connection, and does not need to send an RRC connection establishment complete message or an RRC connection resume complete message to the base station, so that signaling overheads are reduced. If the base station does not obtain the data in the downlink early data transmission from the MME, the base station still performs a previous common RRC connection establishment procedure, to be specific, sends the RRC connection establishment request message or the RRC connection resume request message to the UE. The RRC connection establishment request message or the RRC connection resume request message is the same as the previous message, and the UE cannot obtain the data in the downlink early data transmission from the RRC connection establishment request message or RRC connection resume request message. Therefore, the UE sends an RRC connection establishment complete message or an RRC connection resume complete message to the base station, establishes the RRC connection to the base station, and then, requests to obtain the downlink data from the base station by using the RRC connection.

Optionally, if data in downlink early data transmission that the UE needs to obtain is user plane data, the following needs to be performed.

S613: The MME sends a bearer modification message to the SGW.

Specifically, after receiving the bearer modification message sent by the MME, the SGW modifies a bearer resource based on the bearer modification message, and delivers the data in the downlink early data transmission by using the modified bearer resource. It should be noted that step S613 is optional. Certainly, step S613 may not be performed either.

S614: The SGW sends the data in the downlink early data transmission to the base station.

Specifically, after the SGW receives the initial UE message or the bearer modification message that is sent by the MME, the SGW sends the data in the downlink early data transmission to the base station.

S615: The MME sends a context resume message to the base station.

Specifically, after the base station receives the context resume message sent by the MME, the base station sets an inactivity timer to determine whether the data in the downlink early data transmission arrives. If the base station does not receive, after the inactivity timer expires, the data in the downlink early data transmission that is sent by the SGW, the base station initiates a connection release message, to release an air interface connection between the base station and the UE. If the base station receives the data in the downlink early data transmission from the SGW before the inactivity timer expires, the base station sends the received data in downlink early data transmission to the UE, and then initiates a connection release message, to release an air interface connection between the base station and the UE.

It should be noted that there is no execution sequence between S615 and S608 in terms of time and logic. That is, there is no strict sequence between sending, by the MME, the paging acknowledgement message to the SGW and sending, by the MME, the context resume message to the base station. S615 and S608 may be simultaneously performed.

S616: The base station sends the data in the downlink early data transmission to the UE.

Specifically, after receiving the context resume message sent by the MME, the base station sends the RRC connection establishment request message or the RRC connection resume request message to the UE. If the base station receives the data in the downlink early data transmission that is sent by the SGW, the base station uses the RRC connection establishment request message or the RRC connection resume request message to carry the data in the downlink early data transmission received by the base station. The UE receives the RRC connection establishment request message or the RRC connection resume request message, thereby obtaining the data in the downlink early data transmission carried in the RRC connection establishment request message or the RRC connection resume request message. After obtaining the data in the downlink early data transmission, the UE releases the air interface connection to the base station based on the connection release message initiated by the base station, and enters an idle mode. If the base station does not receive the data in the downlink early data transmission that is sent by the SGW, the UE directly releases the air interface connection to the base station based on the connection release message initiated by the base station, and enters an idle mode.

During implementation of this embodiment of this application, when the UE has the capability of supporting the MT EDT, the base station can obtain the MT EDT indication information from a UE side or an MME side, thereby obtaining the capability of supporting the MT EDT by the UE. Then, the base station obtains, in advance by using the MME, the data in the downlink early data transmission that is sent from the SGW, or the base station directly obtains the data in the downlink early data transmission from the SGW in advance, and sends the data in the downlink early data transmission to the UE, so that the UE does not need to establish the RRC connection, and does not need to send the RRC connection establishment complete message or the RRC connection resume complete message to the base station, so that signaling overheads are reduced, a latency of downlink data arriving at the UE is reduced.

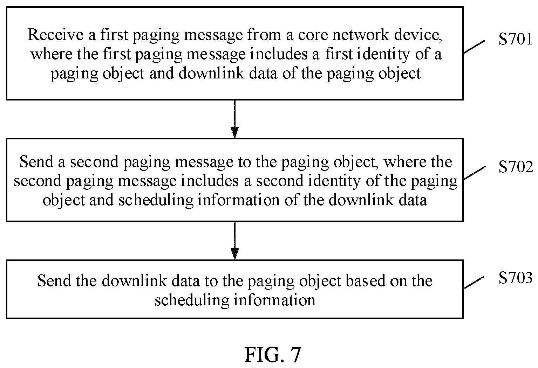

FIG. 7 is a schematic flowchart of another paging message transmission method according to an embodiment of this application. The method includes but is not limited to the following steps.

S701: Receive a first paging message from a core network device, where the first paging message includes a first identity of a paging object and downlink data of the paging object.

Before a base station receives the first paging message sent by an MME, an application server sends a downlink message to a service capability exposure function (Service Capability Exposure Function, SCEF) network element.

Specifically, the application server generates downlink data that UE needs to obtain. The application server uses the downlink message to be sent to the SCEF network element to carry the downlink data. In addition, the downlink message further carries an identity that is used for paging and that corresponds to the downlink data.

In a possible implementation, the paging identity information includes a group paging identity and/or a terminal paging identity.

Specifically, the downlink message sent by the application server to the SCEF network element may be a downlink group message. To be specific, the downlink data is not used for one UE, but is used for a group of (a plurality of) UEs. In this case, a paging identity carried in the downlink group message is a group identity (Group id) corresponding to the downlink data or another group identity derived from the group ID. The derived group identity mainly changes in length, and may be adjusted.

Certainly, the downlink data in the downlink message may alternatively be used for only single UE. In this case, the paging identity carried in the downlink message is a UE identity corresponding to the UE. The UE identity may be usually an S-TMSI of the UE. If the S-TMSI of the UE is unavailable, the UE identity may alternatively be an IMSI, a GUTI, or an IMEI. This is not limited in this application.

The SCEF network element sends the received downlink message to the MME. The downlink message may be the downlink group message that carries the group ID and the downlink data, or may be a downlink message for specific UE, where the downlink message carries a UE identity and downlink data of the UE.

If the MME receives the downlink group message sent by the SCEF network element, paging capability information in the first paging message sent by the MME to the base station is used to carry group paging capability information of the UE. The group paging capability information is sent to the MME by the base station when the base station sends a UE capability information indication message to the MME during previous data communication between the base station and the UE. The MME stores the group paging capability information, and uses the group paging capability information for the MME to perform next paging. The first paging message further includes a group ID and downlink data.

If the MME receives the downlink message that is for the specific UE and that is sent by the SCEF network element, paging capability information in the first paging message sent by the MME to the base station is used to carry paging capability information corresponding to the UE. The paging capability information corresponding to the UE is sent to the MME by the base station when the base station sends a UE capability information indication message to the MME during previous data communication between the base station and the UE. The MME stores the paging capability information corresponding to the UE, and uses the paging capability information corresponding to the UE for the MME to perform next paging. The first paging message further includes the UE identity and the downlink data of the UE.

S702: Send a second paging message to the paging object, where the second paging message includes a second identity of the paging object and scheduling information of the downlink data.

Optionally, after receiving the first paging message, the base station determines, based on the paging capability information in the first paging message, a paging carrier group corresponding to the UE, where the paging capability information may include capability information indicating whether latency-sensitive paging is supported. After the base station determines the paging carrier group, the base station obtains a paging carrier from the determined paging carrier group through calculation by using a specific formula, and sends the second paging message to the UE by using the paging carrier. Certainly, the base station previously needs to group carriers used for paging, and different groups of carriers correspond to different paging configurations. For example, a PCCH configuration of an SIB 22 is modified, and configurations of a DRX cycle and nB that correspond to a latency-sensitive service are added. In this way, the PCCH configuration can satisfy a short-latency requirement.

The base station calculates a PSF and a PO of the UE by using information such as a DRX cycle and the identity of the UE, and sends the second paging message to the UE at a paging occasion indicated by using the PSF and the PO. It should be noted that the first paging message herein is merely used to distinguish between the paging message and the paging message that is sent by the MME to the base station, and does not impose another limitation on the paging message.

In a possible implementation, before the second paging message is sent to a terminal, the method further includes: mapping the group paging identity into a group radio paging identity, and sending the group paging identity and/or a mapping relationship between the group paging identity and the group radio paging identity to the terminal by using a broadcast message or dedicated signaling.

Specifically, if the paging capability information in the first paging message that is sent by the MME and that is received by the base station carries the group paging capability information of the UE and the group ID, the base station newly adds, to the second paging message sent to the UE, the group ID or a group identity derived from the group ID and scheduling information of downlink group data corresponding to the group ID or the group identity derived from the group ID. For example, the group ID or the group identity derived from the group ID and the scheduling information of the corresponding downlink group data are added to a paging record table of the second paging message. It should be noted that a plurality of group IDs or group identities derived from the group IDs and scheduling information of downlink group data corresponding to the group IDs or the group identities derived from the group IDs may be added to the paging record table.

The base station maps the group ID into a group radio identifier (Group-RNTI), and sends a mapping relationship to the UE by using a broadcast message or dedicated signaling. After receiving the second paging message, the UE checks whether the group ID in the paging message is a group ID supported by the UE. If the UE supports the group ID in the paging message, the UE reads scheduling information of downlink group data corresponding to the group ID, and obtains, from the scheduling information of the downlink group data, downlink group data sent on a PDSCH channel.

In a possible implementation, that the second paging message is sent to a terminal includes: scrambling, by using a P-RNTI, a PDCCH for scheduling the second paging message, so that the terminal receives scheduling information that is in the second paging message and that is carried on the PDCCH, and receives, based on the scheduling information, the second paging message sent on the physical downlink shared channel PDSCH.

Specifically, when sending the second paging message to the UE, the base station scrambles, by using the P-RNTI, the PDCCH for scheduling the paging message. A value of the P-RNTI is 0xFFFE. The P-RNTI is shared by all UEs in a cell. The UE receives, according to an existing paging occasion monitoring solution, the scheduling information in the second paging message carried on the PDCCH, and obtains a specific time-frequency resource location of the second paging message on the PDSCH. The UE receives, based on the scheduling information, the second paging message sent on the PUSCH.

In a possible implementation, that the second paging message is sent to a terminal includes: scrambling, by using a group-RNTI, a PDCCH for scheduling the second paging message, so that the terminal receives scheduling information that is in the second paging message and that is carried on the PDCCH, and receives, based on the scheduling information, the second paging message sent on the PDSCH.

Specifically, the UE distinguishes group IDs by using a group-RNTI in the second paging message. After receiving the second paging message sent by the base station, the UE can correctly receive, based on the mapping relationship, a PDCCH that corresponds to the group ID supported by the UE and that is used for scheduling the second paging message, and receive the scheduling information in the second paging message on the PDCCH, to obtain a specific time-frequency resource location of the second paging message on the PDSCH. The UE receives, based on the scheduling information, the second paging message sent on the PUSCH. The base station adds scheduling information of downlink group data corresponding to the group ID to the second message sent to the UE. For example, the base station adds the scheduling information of the downlink group data corresponding to the group ID to the paging record table of the second paging message. It should be noted that, scheduling information of downlink group data corresponding to only one group ID can be added to the paging record table. That is, one paging message can include only one downlink group data packet. After receiving the second paging message, the UE directly reads the scheduling information, in the paging message, of the downlink group data, and obtains, from the scheduling information of the downlink group data, the downlink group data sent on the PDSCH channel.

S703: Send the downlink data to the paging object based on the scheduling information.

During implementation of this embodiment of this application, before sending the first paging message to the base station, the MME has obtained downlink data from an SGW, the second paging message sent by the base station to the UE carries the paging identity information and the scheduling information of the downlink data. After receiving the paging message transmitted on the PDSCH, the UE can obtain the corresponding downlink data based on the scheduling information in the paging message, and does not need to establish an RRC connection, so that a downlink data receiving latency can be effectively reduced.

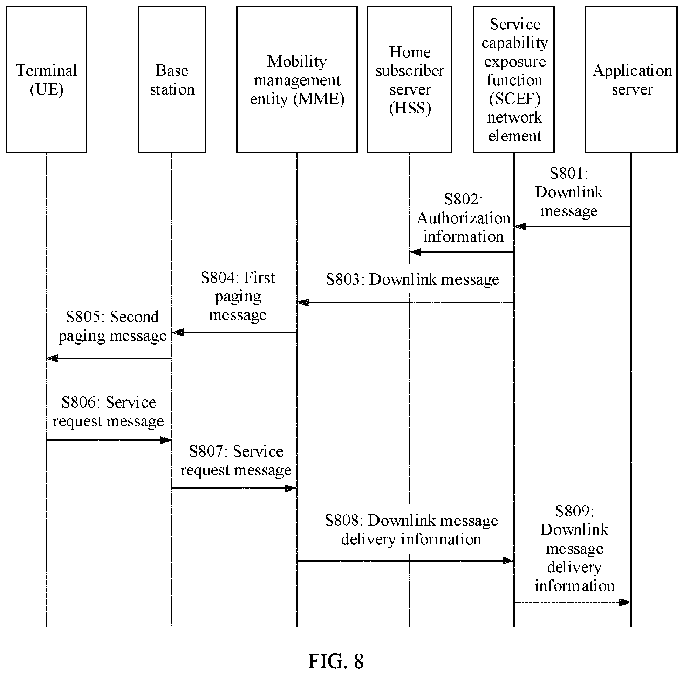

FIG. 8 is a schematic flowchart of a paging message transmission method according to an embodiment of this application. The method includes but is not limited to the following steps.

S801: An application server sends a downlink message to a service capability exposure function (Service Capability Exposure Function, SCEF) network element.

Specifically, the application server generates downlink data that UE needs to obtain. The application server uses the downlink message to be sent to the SCEF network element to carry the downlink data. In addition, the downlink message further carries an identity that is used for paging and that corresponds to the downlink data.

It should be noted that the downlink message may be a downlink group message. To be specific, the downlink data is not used for one UE, but is used for a group of (a plurality of) UEs. In this case, a paging identity carried in the downlink group message is a group identity (Group id) corresponding to the downlink data or another group identity derived from the group ID. The derived group identity mainly changes in length, and may be adjusted.

Certainly, the downlink data in the downlink message may alternatively be used for only single UE. In this case, the paging identity carried in the downlink message is a UE identity corresponding to the UE. The UE identity may be usually an S-TMSI of the UE. If the S-TMSI of the UE is unavailable, the UE identity may alternatively be an IMSI, a GUTI, or an IMEI. This is not limited in this application.

S802: The SCEF network element sends authorization information to a home subscriber server (Home Subscriber Server, HSS).

S803: The SCEF network element sends the downlink message to an MME.

Specifically, the SCEF network element sends the received downlink message to the MME. The downlink message may be the downlink group message that carries the group ID and the downlink data, or may be a downlink message for specific UE, where the downlink message carries a UE identity and downlink data of the UE.

S804: The MME sends a first paging message to a base station.

Specifically, if the MME receives the downlink group message sent by the SCEF network element, paging capability information in the first paging message sent by the MME to the base station is used to carry group paging capability information of the UE. The group paging capability information is sent to the MME by the base station when the base station sends a connection release complete message to the MME after previous data communication between the base station and the UE. The MME stores the group paging capability information, and uses the group paging capability information for the MME to perform next paging. The first paging message further includes a group ID and downlink data.

If the MME receives the downlink message that is for the specific UE and that is sent by the SCEF network element, paging capability information in the first paging message sent by the MME to the base station is used to carry paging capability information corresponding to the UE. The paging capability information corresponding to the UE is sent to the MME by the base station when the base station sends a UE capability information indication message to the MME during previous data communication between the base station and the UE. The MME stores the paging capability information corresponding to the UE, and uses the paging capability information corresponding to the UE for the MME to perform next paging. The first paging message further includes the UE identity and the downlink data of the UE.

It should be noted that the first paging message herein is merely used to distinguish between the paging message and a paging message that is sent by the base station to the UE, and does not impose another limitation on the paging message.

S805: The base station sends a second paging message to the UE.

Specifically, when sending the second paging message to the UE, the base station scrambles, by using a P-RNTI, a PDCCH for scheduling the paging message. A value of the P-RNTI is 0xFFFE. The P-RNTI is shared by all UEs in a cell. The UE receives, according to an existing paging occasion monitoring solution, scheduling information in the second paging message carried on the PDCCH, and obtains a specific time-frequency resource location of the second paging message on a PDSCH. The UE receives, based on the scheduling information, the second paging message sent on the PUSCH.

Further, after receiving the first paging message, the base station may determine, based on the paging capability information in the first paging message, a group paging carrier corresponding to the UE, where the paging capability information may include capability information indicating whether latency-sensitive paging is supported. After the base station determines the paging carrier group, the base station obtains a paging carrier from the determined paging carrier group through calculation by using a specific formula, and sends the second paging message to the UE by using the paging carrier. Certainly, the base station previously needs to group carriers used for paging, and different groups of carriers correspond to different paging configurations. For example, a PCCH configuration of an SIB 22 is modified, and configurations of a DRX cycle and nB that correspond to a latency-sensitive service are added. In this way, the PCCH configuration can satisfy a short-latency requirement.

The base station calculates a PSF and a PO of the UE by using information such as a DRX cycle and the identity of the UE, and sends the second paging message to the UE at a paging occasion indicated by using the PSF and the PO. It should be noted that the first paging message herein is merely used to distinguish between the paging message and the paging message that is sent by the MME to the base station, and does not impose another limitation on the paging message.

If the paging capability information in the first paging message that is sent by the MME and that is received by the base station carries the group paging capability information of the UE and the group ID, the base station newly adds, to the second paging message sent to the UE, the group ID or a group identity derived from the group ID and scheduling information of downlink group data corresponding to the group ID or the group identity derived from the group ID. For example, the group ID or the group identity derived from the group ID and the scheduling information of the corresponding downlink group data are added to a paging record table of the second paging message. It should be noted that a plurality of group IDs or group identities derived from the group IDs and scheduling information of downlink group data corresponding to the group IDs or the group identities derived from the group IDs may be added to the paging record table.

If the paging capability information in the first paging message that is sent by the MME and that is received by the base station carries paging capability information of specific UE and an identity of the UE, the base station newly adds scheduling information of downlink data corresponding to the identity of the UE to the second paging message to be sent to the UE. For example, in a paging record table of the second paging message, because UE identities of UEs have already been recorded in the paging record table, the identities of the UEs does not need to be added again, but scheduling information of downlink data corresponding to the identities of the UEs is added. It should be noted that scheduling information of downlink data corresponding to a plurality of identities of UEs may be added to the paging record table.

After receiving the second paging message, the UE checks whether the group ID in the paging message is a group ID supported by the UE. If the UE supports the group ID in the paging message, the UE reads scheduling information of downlink group data corresponding to the group ID, and obtains, from the scheduling information of the downlink group data, downlink group data sent on the PDSCH channel. Optionally, the downlink group data is scrambled by using a group-RNTI. The base station needs to map the group ID in the first paging message received from the MME into a group radio paging identity (Group-RNTI). The base station sends a mapping relationship between the group ID and the group-RNTI to the UE by using a broadcast message or dedicated signaling. After receiving the second paging message sent by the base station, the UE can correctly interpret and obtain the downlink group data based on the mapping relationship.

Similarly, if paging capability information in the second paging message sent by the base station carries paging capability information of specific UE and an identity of the UE. After receiving the second paging message, the UE checks whether the identity of the UE in the paging message is consistent with the identity of the UE. If the identities are consistent, the UE reads scheduling information of downlink data corresponding to the identity of the UE, and obtains, from the scheduling information of the downlink data, downlink data sent on the PDSCH channel.

Optionally, if the paging capability information in the first paging message that is sent by the MME and that is received by the base station carries the group paging capability information of the UE and the group ID, the base station maps the group ID into a group-RNTI. The base station sends a mapping relationship between the group ID and the group-RNTI to the UE by using a broadcast message or dedicated signaling. The base station sends the second paging message to the UE. The PDCCH for scheduling the paging message is scrambled by using the group-RNTI. The UE receives, according to the existing paging occasion monitoring solution, the scheduling information in the second paging message carried on the PDCCH, and obtains the specific time-frequency resource location of the second paging message on the PDSCH. The UE receives, based on the scheduling information, the second paging message sent on the PUSCH.

It can be learned that in this solution, the UE distinguishes group IDs by using a group-RNTI in the second paging message. After receiving the second paging message sent by the base station, the UE can correctly receive, based on the mapping relationship, a PDCCH that corresponds to the group ID supported by the UE and that is used for scheduling the second paging message, and receive the scheduling information in the second paging message on the PDCCH, to obtain the specific time-frequency resource location of the second paging message on the PDSCH. The UE receives, based on the scheduling information, the second paging message sent on the PUSCH. The base station adds scheduling information of downlink group data corresponding to the group ID to the second message sent to the UE. For example, the base station adds the scheduling information of the downlink group data corresponding to the group ID to the paging record table of the second paging message. It should be noted that, scheduling information of downlink group data corresponding to only one group ID can be added to the paging record table. That is, one paging message can include only one downlink group data packet. After receiving the second paging message, the UE directly reads the scheduling information, in the paging message, of the downlink group data, and obtains, from the scheduling information of the downlink group data, the downlink group data sent on the PDSCH channel.

S806: The UE sends a service request message to the base station.

Specifically, after the UE determines that the UE is paged and receives the downlink data, the UE initiates random access to the base station and sends the service request message to the base station, to return an acknowledgement of receiving of the downlink data to the server.

Optionally, the UE performs random access in a legacy manner or an early data transmission manner. If the UE performs random access in the legacy manner, the UE uses an RRC connection establishment complete message or an RRC connection resume request message sent to the base station to carry the service request message. If the UE performs random access in the early data transmission manner, the UE uses an RRC connection request or an RRC connection resume request sent to the base station to carry the service request message.

S807: The base station sends the service request message to the MME.

Specifically, after receiving the RRC connection establishment complete message or the RRC connection resume request message that is sent by the UE in the legacy manner or the RRC connection request or the RRC connection resume request that is sent by the UE in the early data transmission manner, the base station obtains a carried service request message, and sends the service request message to the MME.

S808: The MME sends downlink message delivery information to the SCEF network element.

S809: The SCEF network element sends the downlink message delivery information to the application server.

During implementation of this embodiment of this application, before sending the first paging message to the base station, the MME has obtained downlink data from an SGW, the second paging message sent by the base station to the UE carries paging identity information and the scheduling information of the downlink data. After receiving the paging message transmitted on the PDSCH, the UE can obtain the corresponding downlink data based on the scheduling information in the paging message, and does not need to establish an RRC connection, so that a downlink data receiving latency can be effectively reduced.

The foregoing describes in detail the methods in the embodiments of this application. To better implement the foregoing solutions in the embodiments of this application, correspondingly, the following further provides related apparatuses configured to cooperate in implementation of the foregoing solutions.

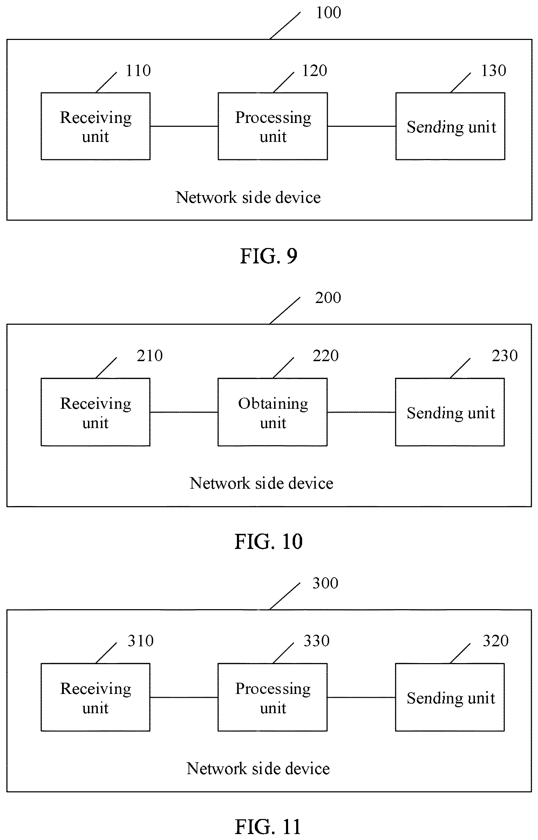

FIG. 9 is a schematic structural diagram of a network side device according to an embodiment of this application. The network side device 100 includes at least a receiving unit 110, a processing unit 120, and a sending unit 130.

The receiving unit 110 is configured to receive a first paging message sent by a core network device, where the first paging message includes a first indication corresponding to a terminal, and the first indication is used to indicate that the terminal supports latency-sensitive paging.

The processing unit 120 is configured to determine a first paging carrier group corresponding to the first indication, where the first paging carrier group includes a portion of a plurality of paging carriers of a network side device.

The sending unit 130 is configured to send a second paging message to the terminal on the paging carrier in the first paging carrier group.

In a possible embodiment, the receiving unit 110 is further configured to receive paging capability information sent by the terminal, where the paging capability information includes a second indication, and the second indication is used to indicate that the terminal supports the latency-sensitive paging; and the sending unit 130 is further configured to send paging capability-related information to the core network device, where the paging capability-related information includes a third indication, and the third indication is used to indicate that the terminal supports the latency-sensitive paging.

In a possible embodiment, the sending unit 130 is further configured to send paging configurations to the terminal, where the paging configurations are used to indicate the first paging carrier group and a first paging configuration parameter of the first paging carrier group, and the first paging configuration parameter includes a first default paging cycle DRX cycle.

In a possible embodiment, the paging configurations are further used to indicate a second paging carrier group and a second paging configuration parameter of the second paging carrier group, the second paging carrier group includes another portion of the plurality of paging carriers of the network side device, and the second paging configuration parameter includes a second DRX cycle.

It may be understood that functions of function modules of the network side device 100 in this embodiment may be specifically implemented according to the methods in the foregoing method embodiments. Details are not described herein again.

During implementation of this embodiment of this application, the network side device groups the paging carriers, and performs specific paging configuration on the different groups of carriers, so that different paging cycles in a cell can be supported, and paging requirements of both short-latency UE and deep-coverage UE are satisfied.

FIG. 10 is a schematic structural diagram of another network side device according to an embodiment of this application. The network side device 200 includes at least a receiving unit 210, an obtaining unit 220, and a sending unit 230.

The receiving unit 210 is configured to receive a message 3 sent by a terminal in a random access process, where the message 3 includes first information, and the first information is used to indicate mobile terminated early data transmission.

The obtaining unit 220 is configured to obtain downlink data sent by a first core network device.

The sending unit 230 is configured to send a message 4 to the terminal, where the message 4 includes the downlink data.

In a possible embodiment, the first information is an identity of the terminal, and there is an association relationship between the identity of the terminal and the mobile terminated early data transmission; the first information is a cause value of the message 3; the first information is capability information or category information of the terminal; or the first information is information used to request the mobile terminated early data transmission.

In a possible embodiment, the sending unit 230 is further configured to send second information to the first core network device, where the second information is used to indicate the mobile terminated early data transmission of the terminal. The receiving unit 210 is further configured to receive the downlink data of the terminal from the first core network device.

In a possible embodiment, the sending unit 230 is further configured to send the second information to a second core network device, where the second information is used to indicate the mobile terminated early data transmission of the terminal. The obtaining unit 220 is further configured to establish a data bearer of the terminal with the first core network device. The receiving unit 210 is further configured to receive the downlink data of the terminal from the first core network device over the data bearer.

In a possible embodiment, the receiving unit 210 is further configured to receive a first message from the second core network device, where the first message is used to indicate to resume a context of the terminal.

It may be understood that functions of function modules of the network side device in this embodiment may be specifically implemented according to the methods in the foregoing method embodiments. Details are not described herein again.

During implementation of this embodiment of this application, when UE has a capability of supporting MT EDT, a base station can obtain MT EDT indication information from a UE side or an MME side, thereby obtaining the capability of supporting the MT EDT by the UE. Then, the base station obtains, in advance by using the MME, data in downlink early data transmission that is sent from an SGW, or the base station directly obtains data in downlink early data transmission from an SGW in advance, and sends the data in the downlink early data transmission to the UE, so that the UE does not need to establish an RRC connection, and does not need to send an RRC connection establishment complete message or an RRC connection resume complete message to the base station, so that signaling overheads are reduced, a latency of downlink data arriving at the UE is reduced.

FIG. 11 is a schematic structural diagram of another network side device according to an embodiment of this application. The network side device 300 includes at least a receiving unit 310 and a sending unit 320.

The receiving unit 310 is configured to receive a first paging message sent by a core network device, where the first paging message includes a first identity of a paging object and downlink data of the paging object.

The sending unit 320 is configured to send a second paging message to the paging object, where the second paging message includes a second identity of the paging object and scheduling information of the downlink data.

The sending unit 320 is further configured to send the downlink data to the paging object based on the scheduling information.

In a possible embodiment, the network side device further includes a processing unit 330. The processing unit 330 is configured to scramble the downlink data by using a radio network temporary identifier RNTI of the paging object. The sending unit 320 is further configured to send the scrambled downlink data to the paging object based on the scheduling information.

In a possible embodiment, the sending unit 320 is further configured to send, to the paging object, control information for scheduling the second paging message.

In a possible embodiment, the processing unit 330 is further configured to scramble the control information by using a radio network temporary identifier RNTI of the paging object. The sending unit 320 is further configured to send the scrambled control information to the paging object.

In a possible embodiment, the processing unit 330 is further configured to obtain the RNTI of the paging object. The sending unit 320 is further configured to send a correspondence between the second identity and the RNTI to the paging object.

In a possible embodiment, the paging object is a terminal or a terminal group.

It may be understood that functions of function modules of the network side device in this embodiment may be specifically implemented according to the methods in the foregoing method embodiments. Details are not described herein again.

During implementation of this embodiment of this application, before sending the first paging message to a base station, an MME has obtained downlink data from an SGW, the second paging message sent by the base station to UE carries paging identity information and the scheduling information of the downlink data. After receiving the paging message transmitted on a PDSCH, the UE can obtain the corresponding downlink data based on the scheduling information in the paging message, and does not need to establish an RRC connection, so that a downlink data receiving latency can be effectively reduced.

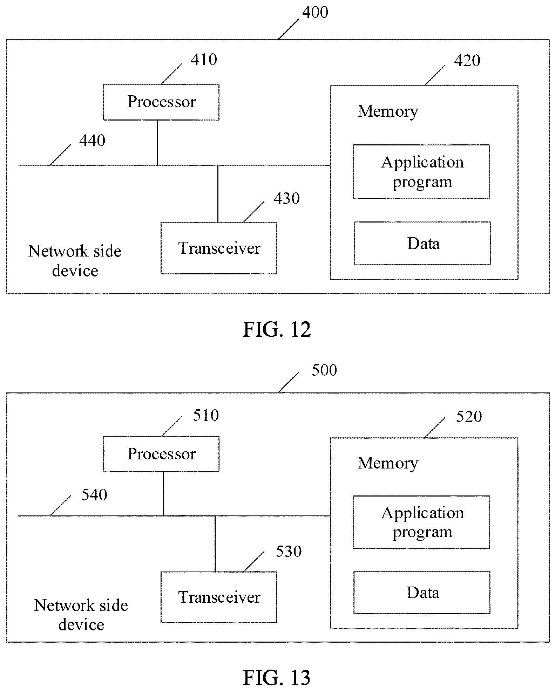

FIG. 12 is a network side device 400 according to an embodiment of this application. The network side device 400 includes at least a processor 410, a memory 420, and a transceiver 430. The processor 410, the memory 420, and the transceiver 430 are connected to each other by using a bus 440.

The memory 420 includes but is not limited to a random access memory (Random Access Memory, RAM), a read-only memory (Read-Only Memory, ROM), or an erasable programmable read-only memory (Erasable Programmable Read-Only Memory, EPROM or a flash memory). The memory 420 is configured to store a related instruction and related data.

The transceiver 430 may include a receiver and a transmitter, for example, a radio frequency module. That the processor 410 receives or sends a message described below may be specifically understood as that the processor 410 receives or sends the message by using the transceiver 430.

The processor 410 may be one or more central processing units (Central Processing Unit, CPU). When the processor 410 is a CPU, the CPU may be a single-core CPU or a multi-core CPU.

The processor 410 in the network side device 400 is configured to read program code stored in the memory 420, to perform the following operations:

receiving, by the processor 410 by using the transceiver 430, a first paging message sent by a core network device, where the first paging message includes a first indication corresponding to a terminal, and the first indication is used to indicate that the terminal supports latency-sensitive paging;

determining, by the processor 410, a first paging carrier group corresponding to the first indication, where the first paging carrier group includes a portion of a plurality of paging carriers of the network side device; and

selecting, by the processor 410, a paging carrier in the first paging carrier group, and sending a second paging message by using the transceiver 430.

It should be noted that, specific implementation of the operations may be further specifically implemented according to the methods in the foregoing method embodiments. Details are not described herein again.

During implementation of this embodiment of this application, a base station groups the paging carriers, and performs specific paging configuration on the different groups of carriers, so that different paging cycles in a cell can be supported, and paging requirements of both short-latency UE and deep-coverage UE are satisfied.

FIG. 13 is another network side device 500 according to an embodiment of this application. The network side device 500 includes at least a processor 510, a memory 520, and a transceiver 530. The processor 510, the memory 520, and the transceiver 530 are connected to each other by using a bus 540.

The memory 520 includes but is not limited to a random access memory (Random Access Memory, RAM), a read-only memory (Read-Only Memory, ROM), or an erasable programmable read-only memory (Erasable Programmable Read-Only Memory, EPROM or a flash memory). The memory 520 is configured to store a related instruction and related data.

The transceiver 530 may include a receiver and a transmitter, for example, a radio frequency module. That the processor 510 receives or sends a message described below may be specifically understood as that the processor 510 receives or sends the message by using the transceiver 530.

The processor 510 may be one or more central processing units (Central Processing Unit, CPU). When the processor 510 is a CPU, the CPU may be a single-core CPU or a multi-core CPU.

The processor 510 in the network side device 500 is configured to read program code stored in the memory 520, to perform the following operations:

receiving, by the processor 510 in a random access process by using the transceiver 530, a message 3 sent by a terminal, where the message 3 includes first information, and the first information is used to indicate mobile terminated early data transmission;

receiving, by the processor 510 by using the transceiver 530, downlink data, sent by a first core network device, of the terminal;

receiving, by the processor 510 by using the transceiver 530, data in downlink early data transmission that is sent by the core network device; and

sending, by the processor 510, the downlink data to the terminal by using the transceiver 530.

It should be noted that, specific implementation of the operations may be further specifically implemented according to the methods in the foregoing method embodiments. Details are not described herein again.

During implementation of this embodiment of this application, when UE has a capability of supporting MT EDT, a base station can obtain MT EDT indication information from a UE side or an MME side, thereby obtaining the capability of supporting the MT EDT by the UE. Then, the base station obtains, in advance by using the MME, data in downlink early data transmission that is sent from an SGW, or the base station directly obtains data in downlink early data transmission from an SGW in advance, and sends the data in the downlink early data transmission to the UE, so that the UE does not need to establish an RRC connection, and does not need to send an RRC connection establishment complete message or an RRC connection resume complete message to the base station, so that signaling overheads are reduced, a latency of downlink data arriving at the UE is reduced.

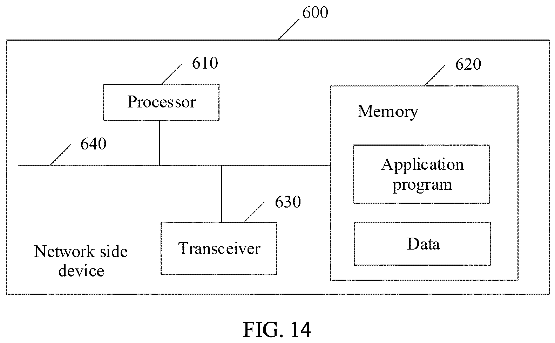

FIG. 14 is another network side device 600 according to an embodiment of this application. The network side device 600 includes at least a processor 610, a memory 620, and a transceiver 630. The processor 610, the memory 620, and the transceiver 630 are connected to each other by using a bus 640.

The memory 620 includes but is not limited to a random access memory (Random Access Memory, RAM), a read-only memory (Read-Only Memory, ROM), or an erasable programmable read-only memory (Erasable Programmable Read-Only Memory, EPROM or a flash memory). The memory 620 is configured to store a related instruction and related data.

The transceiver 630 may include a receiver and a transmitter, for example, a radio frequency module. That the processor 610 receives or sends a message described below may be specifically understood as that the processor 610 receives or sends the message by using the transceiver 630.

The processor 610 may be one or more central processing units (Central Processing Unit, CPU). When the processor 610 is a CPU, the CPU may be a single-core CPU or a multi-core CPU.

The processor 610 in the network side device 600 is configured to read program code stored in the memory 620, to perform the following operations:

receiving, by the processor 610 by using the transceiver 630, a first paging message sent by a core network device, where the first paging message includes a first identity of a paging object and downlink data of the paging object;
sending, by the processor 610, a second paging message by using the transceiver 630, where the second paging message includes a second identity of the paging object and scheduling information of the downlink data; and
sending, by the processor 610, the downlink data to the paging object by using the transceiver 630.

It should be noted that, specific implementation of the operations may be further specifically implemented according to the methods in the foregoing method embodiments. Details are not described herein again.

During implementation of this embodiment of this application, before sending the first paging message to a base station, an MME has obtained downlink data from an SGW, the second paging message sent by the base station to UE carries paging identity information and the scheduling information of the downlink data. After receiving the paging message transmitted on a PDSCH, the UE can obtain the corresponding downlink data based on the scheduling information in the paging message, and does not need to establish an RRC connection, so that a downlink data receiving latency can be effectively reduced.

An embodiment of this application further provides a computer-readable storage medium. The computer-readable storage medium stores an instruction. When the instruction is run on a computer or a processor, the computer or the processor is enabled to perform one or more steps in any one of the foregoing data transmission methods. If the composite modules in the foregoing apparatuses are implemented in a form of software functional units and sold or used as independent products, the composite modules may be stored in the computer-readable storage medium.

The computer-readable storage medium may be an internal storage unit of the network side device, the terminal device, or the core network device in any one of the foregoing embodiments, for example, a hard disk or a memory of the network side device, the terminal device, or the core network device. The computer-readable storage medium may alternatively be an external storage device of the network side device, the terminal device, or the core network device, for example, a plug-in hard disk, a smart media card (Smart Media Card, SMC), or a secure digital (Secure Digital, SD) card, a flash card (Flash Card), or the like that is equipped on the network side device, the terminal device, or the core network device. Further, the computer-readable storage medium may alternatively include both an internal storage unit and an external storage device of the network side device, the terminal device, or the core network device. The computer-readable storage medium is configured to store the computer program and another program and data that are required by the network side device, the terminal device, or the core network device. The foregoing computer-readable storage medium may be further configured to temporarily store data that has been output or is to be output.

A person of ordinary skill in the art may understand that all or some of the processes of the methods in the embodiments may be implemented by a computer program instructing relevant hardware. The program may be stored in a computer-readable storage medium. When the program is executed, the processes in the embodiments of the methods are performed. The foregoing storage medium includes: any medium that can store program code, such as a ROM, a RAM, a magnetic disk, or an optical disc.

According to an actual requirement, a sequence of the steps of the methods in the embodiments of this application may be adjusted, and the steps may be combined or deleted.

The modules in the apparatuses in the embodiments of this application may be combined, divided, and deleted according to an actual requirement.

The scope of the invention is defined by the appended claims.

**Claims**

1. A paging message transmission method, comprising:

receiving (S201) a first paging message from a core network device, wherein the first paging message comprises a first indication corresponding to a terminal, and the first indication is used to indicate that the terminal supports latency-sensitive paging;
determining (S202) a first paging carrier group corresponding to the first indication, wherein the first paging carrier group comprises a portion of a plurality of paging carriers of a network side device; and
paging (S203) the terminal on the paging carrier in the first paging carrier group; wherein the method further comprises:

receiving paging capability information from the terminal, wherein the paging capability information comprises a second indication, and the second indication is used to indicate that the terminal supports the latency-sensitive paging;
sending paging capability-related information to the core network device, wherein the paging capability-related information comprises a third indication, and the third indication is used to indicate that the terminal supports the latency-sensitive paging, wherein
sending paging configurations to the terminal, wherein the paging configurations are used to indicate the first paging carrier group and a first paging configuration parameter of the first paging carrier group, and the first paging configuration parameter comprises a first DRX cycle, and **characterized in that**
the paging configurations are further used to indicate a second paging carrier group and a second paging configuration parameter of the second paging carrier group, the second paging carrier group comprises another portion of the plurality of paging carriers of the network side device, and the second paging configuration parameter comprises a second DRX cycle.

2. A paging message transmission method, comprising:

receiving paging configurations from a network side device, wherein the paging configurations are used to indicate a first paging carrier group and a first paging configuration parameter of the first paging carrier group, the first paging carrier group comprises a portion of a plurality of paging carriers of the network side device, the first paging configuration parameter comprises a first DRX cycle, and the first paging carrier group is associated with latency-sensitive paging; and
receiving a paging message on the paging carrier in the first paging carrier group based on the first paging configuration parameter if a terminal supports the latency-sensitive paging, wherein the method further comprises:

sending paging capability information to the network side device, wherein the paging capability information comprises a second indication, and the second indication is used to indicate that the latency-sensitive paging is supported, **characterized in that**
the paging configurations are further used to indicate a second paging carrier group and a second paging configuration parameter of the second paging carrier group, the second paging carrier group comprises another portion of the plurality of paging carriers of the network side device, and the second paging configuration parameter comprises a second DRX cycle.

3. A paging message transmission method, comprising:

receiving paging capability-related information from a network side device, wherein the paging capability-related information comprises a first indication corresponding to a terminal, and the first indication is used to indicate that the terminal supports latency-sensitive paging;
sending a first paging message to the network side device, wherein the first paging message comprises a second indication, and the second indication is used to indicate the latency-sensitive paging,
sending paging configurations to the terminal, wherein the paging configurations are used to indicate the first paging carrier group and a first paging configuration parameter of the first paging carrier group, and the first paging configuration parameter comprises a first DRX cycle, and **characterized in that**

the paging configurations are further used to indicate a second paging carrier group and a second paging configuration parameter of the second paging carrier group, the second paging carrier group comprises another portion of the plurality of paging carriers of the network side device, and the second paging configuration parameter comprises a second DRX cycle.

4. The method according to claim 3, wherein the method further comprises:
receiving a paging trigger message, wherein the paging trigger message is used to trigger paging for the terminal.

5. A network side device (100, 200, 300, 400, 500, 600), comprising means for carrying out steps of the method according to claim 1.

6. A terminal device, comprising means for carrying out steps of the method according to claim 2.

7. A core network device, comprising means for carrying out steps of the method according to claim 3 or 4.

8. A computer program product, comprising instructions being executed by an apparatus to carrying out steps of the method according to any one of claims 1-4.

9. A computer-readable storage medium (420, 520, 620), comprising a computer program product according to claim 8.


**Patentansprüche**

1. Funkrufnachrichtenübertragungsverfahren, umfassend:

Empfangen (S201) einer ersten Funkrufnachricht von einem Kernnetzgerät, wobei die erste Funkrufnachricht eine erste Anzeige, die einem Endgerät entspricht, umfasst und die erste Anzeige dazu verwendet wird, anzuzeigen, dass das Endgerät latenzsensitives Funkrufen unterstützt;
Bestimmen (S202) einer ersten Funkrufträgergruppe, die der ersten Anzeige entspricht, wobei die erste Funkrufträgergruppe einen Teil einer Vielzahl von Funkrufträgern eines netzseitigen Geräts umfasst; und
Funkrufen (S203) des Endgeräts auf dem Funkrufträger in der ersten Funkrufträgergruppe; wobei das Verfahren ferner Folgendes umfasst:

Empfangen von Funkruffähigkeitsinformationen von dem Endgerät, wobei die Funkruffähigkeitsinformationen eine zweite Anzeige umfassen und die zweite Anzeige dazu verwendet wird, anzuzeigen, dass das Endgerät das latenzsensitive Funkrufen unterstützt;
Senden von Funkruffähigkeits-bezogenen Informationen an das Kernnetzgerät, wobei die Funkruffähigkeits-bezogenen Informationen eine dritte Anzeige umfassen und die dritte Anzeige dazu verwendet wird, anzuzeigen, dass das Endgerät das latenzsensitive Funkrufen unterstützt, wobei
Senden von Funkrufkonfigurationen an das Endgerät, wobei die Funkrufkonfigurationen dazu verwendet werden, die erste Funkrufträgergruppe und einen ersten Funkrufkonfigurationsparameter der ersten Funkrufträgergruppe anzuzeigen, und der erste Funkrufkonfigurationsparameter einen ersten DRX-Zyklus umfasst und **dadurch gekennzeichnet, dass**
die Funkrufkonfigurationen ferner dazu verwendet werden, eine zweite Funkrufträgergruppe und einen zweiten Funkrufkonfigurationsparameter der zweiten Funkrufträgergruppe anzuzeigen, wobei die zweite Funkrufträgergruppe einen anderen Teil der Vielzahl von Funkrufträgern des netzseitigen Geräts umfasst und der zweite Funkrufkonfigurationsparameter einen zweiten DRX-Zyklus umfasst.

2. Funkrufnachrichtenübertragungsverfahren, umfassend:

Empfangen von Funkrufkonfigurationen von einem netzseitigen Gerät, wobei die Funkrufkonfigurationen dazu verwendet werden, eine erste Funkrufträgergruppe und einen ersten Funkrufkonfigurationsparameter der ersten Funkrufträgergruppe anzuzeigen, wobei die erste Funkrufträgergruppe einen Teil einer Vielzahl von Funkrufträgern des netzseitigen Geräts umfasst, der erste Funkrufkonfigurationsparameter einen ersten DRX-Zyklus umfasst und die erste Funkrufträgergruppe latenzsensitivem Funkrufen zugeordnet ist; und
Empfangen einer Funkrufnachricht auf dem Funkrufträger in der ersten Funkrufträgergruppe basierend auf dem ersten Funkrufkonfigurationsparameter, wenn ein Endgerät das latenzsensitive Funkrufen unterstützt, wobei das Verfahren ferner Folgendes umfasst:

Senden von Funkruffähigkeitsinformationen an das netzseitige Gerät, wobei die Funkruffähigkeitsinformationen eine zweite Anzeige umfassen und die zweite Anzeige dazu verwendet wird, anzuzeigen, dass das latenzsensitive Funkrufen unterstützt wird, **dadurch gekennzeichnet, dass**
die Funkrufkonfigurationen ferner dazu verwendet werden, eine zweite Funkrufträgergruppe und einen zweiten Funkrufkonfigurationsparameter der zweiten Funkrufträgergruppe anzuzeigen, wobei die zweite Funkrufträgergruppe einen anderen Teil der Vielzahl von Funkrufträgern des netzseitigen Geräts umfasst und der zweite Funkrufkonfigurationsparameter einen zweiten DRX-Zyklus umfasst.

3. Funkrufnachrichtenübertragungsverfahren, umfassend:

Empfangen von Funkruffähigkeits-bezogenen Informationen von einem netzseitigen Gerät, wobei die Funkruffähigkeits-bezogenen Informationen eine erste Anzeige, die einem Endgerät entspricht, umfassen und die erste Anzeige dazu verwendet wird, anzuzeigen, dass das Endgerät latenzsensitives Funkrufen unterstützt;
Senden einer ersten Funkrufnachricht an das netzseitige Gerät, wobei die erste Funkrufnachricht eine zweite Anzeige umfasst und die zweite Anzeige dazu verwendet wird, das latenzsensitive Funkrufen anzuzeigen,
Senden von Funkrufkonfigurationen an das Endgerät, wobei die Funkrufkonfigurationen dazu verwendet werden, die erste Funkrufträgergruppe und einen ersten Funkrufkonfigurationsparameter der ersten Funkrufträgergruppe anzuzeigen, und der erste Funkrufkonfigurationsparameter einen ersten DRX-Zyklus umfasst und **dadurch gekennzeichnet, dass**
die Funkrufkonfigurationen ferner dazu verwendet werden, eine zweite Funkrufträgergruppe und einen zweiten Funkrufkonfigurationsparameter der zweiten Funkrufträgergruppe anzuzeigen, wobei die zweite Funkrufträgergruppe einen anderen Teil der Vielzahl von Funkrufträgern des netzseitigen Geräts umfasst und der zweite Funkrufkonfigurationsparameter einen zweiten DRX-Zyklus umfasst.

4. Verfahren nach Anspruch 3, wobei das Verfahren ferner Folgendes umfasst:
Empfangen einer Funkrufauslösenachricht, wobei die Funkrufauslösenachricht dazu verwendet wird, Funkrufen für das Endgerät auszulösen.

5. Netzseitiges Gerät (100, 200, 300, 400, 500, 600), das Mittel zum Durchführen von Schritten des Verfahrens nach Anspruch 1 umfasst.

6. Endgerät, das Mittel zum Durchführen von Schritten des Verfahrens nach Anspruch 2 umfasst.

7. Kernnetzgerät, das Mittel zum Durchführen von Schritten des Verfahrens nach Anspruch 3 oder 4 umfasst.

8. Computerprogrammprodukt, das Anweisungen umfasst, die durch eine Vorrichtung ausgeführt werden, um Schritte des Verfahrens nach einem der Ansprüche 1-4 durchzuführen.

9. Computerlesbares Speichermedium (420, 520, 620), das ein Computerprogrammprodukt nach Anspruch 8 umfasst.

**Revendications**

1. Procédé de transmission de messages de radiomessagerie comprenant :

la réception (S201) d'un premier message de radiomessagerie provenant d'un dispositif réseau central, dans lequel le premier message de radiomessagerie comprend une première indication correspondant à un terminal, et la première indication est utilisée pour indiquer que le terminal prend en charge la radiomessagerie sensible à la latence ;
la détermination (S202) d'un premier groupe de porteuses de radiomessagerie correspondant à la première indication, dans lequel le premier groupe de porteuses de radiomessagerie comprend une partie d'une pluralité de porteuses de radiomessagerie d'un dispositif côté réseau ; et
la radiomessagerie (S203) du terminal sur les porteuses de radiomessagerie du premier groupe de porteuses de radiomessagerie ;
dans lequel le procédé comprend en outre :

la réception d'informations sur la capacité de radiomessagerie en provenance du terminal, dans lequel les informations sur la capacité de radiomessagerie comprennent une deuxième indication, et la deuxième indication sert à indiquer que le terminal prend en charge la radiomessagerie sensible à la latence ;

l'envoi d'informations relatives à la capacité de radiomessagerie au dispositif réseau central, dans lequel les informations relatives à la capacité de radiomessagerie comprennent une troisième indication, et la troisième indication sert à indiquer que le terminal prend en charge la radiomessagerie sensible à la latence, dans lequel

l'envoi de configurations de radiomessagerie au terminal, dans lequel les configurations de radiomessagerie servent à indiquer le premier groupe de porteuses de radiomessagerie et un premier paramètre de configuration de radiomessagerie du premier groupe de porteuses de radiomessagerie, et le premier paramètre de configuration de radiomessagerie comprend un premier cycle DRX, et

**caractérisé en ce que**

les configurations de radiomessagerie sont en outre utilisées pour indiquer un second groupe de porteuses de radiomessagerie et un second paramètre de configuration de radiomessagerie du second groupe de porteuses de radiomessagerie, le second groupe de porteuses de radiomessagerie comprend une autre partie de la pluralité de porteuses de radiomessagerie du dispositif côté réseau, et le second paramètre de configuration de radiomessagerie comprend un second cycle DRX.

2. Procédé de transmission de messages de radiomessagerie, comprenant :

la réception de configurations de radiomessagerie provenant d'un dispositif côté réseau, dans lequel les configurations de radiomessagerie sont utilisées pour indiquer un premier groupe de porteuses de radiomessagerie et un premier paramètre de configuration de radiomessagerie du premier groupe de porteuses de radiomessagerie, le premier groupe de porteuses de radiomessagerie comprend une partie d'une pluralité de porteuses de radiomessagerie du dispositif côté réseau, le premier paramètre de configuration de radiomessagerie comprend un premier cycle DRX, et le premier groupe de porteuses de radiomessagerie est associé à une radiomessagerie sensible à la latence ; et

la réception d'un message de radiomessagerie sur les porteuses de radiomessagerie du premier groupe de porteuses de radiomessagerie sur la base du premier paramètre de configuration de radiomessagerie si un terminal prend en charge la radiomessagerie sensible à la latence, dans lequel le procédé comprend en outre :

l'envoi d'informations sur la capacité de radiomessagerie au dispositif côté réseau, dans lequel les informations sur la capacité de radiomessagerie comprennent une deuxième indication, et la deuxième indication sert à indiquer la prise en charge de la radiomessagerie sensible à la latence, **caractérisé en ce que**

les configurations de radiomessagerie sont en outre utilisées pour indiquer un second groupe de porteuses de radiomessagerie et un second paramètre de configuration de radiomessagerie du second groupe de porteuses de radiomessagerie, le second groupe de porteuses de radiomessagerie comprend une autre partie de la pluralité de porteuses de radiomessagerie du dispositif côté réseau, et le second paramètre de configuration de radiomessagerie comprend un second cycle DRX.

3. Procédé de transmission de messages de radiomessagerie, comprenant :

la réception d'informations relatives à la capacité de radiomessagerie en provenance d'un dispositif réseau central, dans lequel les informations relatives à la capacité de radiomessagerie comprennent une première indication correspondant à un terminal, et la première indication sert à indiquer que le terminal prend en charge la radiomessagerie sensible à la latence ;

l'envoi d'un premier message de radiomessagerie au dispositif côté réseau, dans lequel le premier message de radiomessagerie comprend une deuxième indication, et la seconde indication sert à indiquer la radiomessagerie sensible à la latence,

l'envoi de configurations de radiomessagerie au terminal, dans lequel les configurations de radiomessagerie servent à indiquer le premier groupe de porteuses de radiomessagerie et un premier paramètre de configuration de radiomessagerie du premier groupe de porteuses de radiomessagerie, et le premier paramètre de configuration de radiomessagerie comprend un premier cycle DRX, et **caractérisé en ce que**

les configurations de radiomessagerie sont en outre utilisées pour indiquer un second groupe de porteuses de radiomessagerie et un second paramètre de configuration de radiomessagerie du second groupe de porteuses de radiomessagerie, le second groupe de porteuses de radiomessagerie comprend une autre partie de la pluralité de porteuses de radiomessagerie du dispositif côté réseau, et le second paramètre de configuration de radiomessagerie comprend un second cycle DRX.

**4.** Procédé selon la revendication 3, dans lequel le procédé comprend en outre :
la réception d'un message de déclenchement de radiomessagerie, dans lequel le message de déclenchement de radiomessagerie est utilisé pour déclencher la radiomessagerie du terminal.

**5.** Dispositif côté réseau (100, 200, 300, 400, 500, 600), comprenant un moyen de réaliser les étapes du procédé selon la revendication 1.

**6.** Dispositif terminal, comprenant un moyen de réaliser les étapes du procédé selon la revendication 2.

**7.** Dispositif réseau central, comprenant un moyen de réaliser les étapes du procédé selon la revendication 3 ou 4.

**8.** Produit de programme informatique, comprenant des instructions étant exécutées par un appareil pour réaliser les étapes du procédé selon l'une quelconque des revendications 1 à 4.

**9.** Support de stockage lisible par ordinateur (420, 520, 620) comprenant un produit de programme informatique selon la revendication 8.

FIG. 1

Receive a first paging message from a core network device, where the first paging message includes a first indication corresponding to a terminal, and the first indication is used to indicate that the terminal supports latency-sensitive paging

S201

Determine a first paging carrier group corresponding to the first indication, where the first paging carrier group includes a portion of a plurality of paging carriers of a network side device

S202

Page the terminal on the paging carrier in the first paging carrier group

S203

FIG. 2

FIG. 3

| Non-anchor carrier 1 |
| Non-anchor carrier 2 |
| Non-anchor carrier 3 |
| Non-anchor carrier 4 |
| Non-anchor carrier 5 |
| Non-anchor carrier 6 |
| Non-anchor carrier 7 |
| Non-anchor carrier 8 |
| Non-anchor carrier 9 |
| Non-anchor carrier 10 |
| Non-anchor carrier 11 |
| Non-anchor carrier 12 |
| Non-anchor carrier 13 |
| Non-anchor carrier 14 |
| Non-anchor carrier 15 |

⟹

**First group**

| Non-anchor carrier 1 |
| Non-anchor carrier 2 |
| Non-anchor carrier 3 |
| Non-anchor carrier 4 |
| Non-anchor carrier 5 |

**Second group**

| Non-anchor carrier 6 |
| Non-anchor carrier 7 |
| Non-anchor carrier 8 |
| Non-anchor carrier 9 |
| Non-anchor carrier 10 |
| Non-anchor carrier 11 |
| Non-anchor carrier 12 |
| Non-anchor carrier 13 |
| Non-anchor carrier 14 |
| Non-anchor carrier 15 |
| Anchor carrier |

FIG. 4

Send a message 3 to a network side device in a random access process, where the message 3 includes first information, and the first information is used to indicate mobile terminated early data transmission — S501

Obtain downlink data of the terminal from a first core network device — S502

Send a message 4 to the terminal, where the message 4 includes the downlink data — S503

FIG. 5

| Terminal (UE) | Base station | Mobility management entity (MME) | Serving gateway (SGW) | PDN gateway (PGW) | Application server |
|---|---|---|---|---|---|

Downlink data

Downlink data

S601: Downlink data arrival notification

Downlink data

S602: First paging message

S603: Second paging message

S604: Random access preamble

S605: Random access response

S608: Paging acknowledgement message

S606: RRC connection, RRC resume, or RRC early data transmission request

S607: Initial UE Message

TO FIG. 6B TO FIG. 6B TO FIG. 6B TO FIG. 6B TO FIG. 6B TO FIG. 6B

FIG. 6A

CONT. FROM FIG. 6A    CONT. FROM FIG. 6A    CONT. FROM FIG. 6A    CONT. FROM FIG. 6A    CONT. FROM FIG. 6A    CONT. FROM FIG. 6A

S609: Bearer modification message

S610: Downlink early data transmission

S612: Downlink early data transmission

S611: Downlink message

S613: Bearer modification message

S614: Downlink early data transmission

S615: Context resume message

S616: Downlink early data transmission

FIG. 6B

Receive a first paging message from a core network device, where the first paging message includes a first identity of a paging object and downlink data of the paging object — S701

Send a second paging message to the paging object, where the second paging message includes a second identity of the paging object and scheduling information of the downlink data — S702

Send the downlink data to the paging object based on the scheduling information — S703

FIG. 7

FIG. 8

100

Receiving unit 110 — Processing unit 120 — Sending unit 130

Network side device

FIG. 9

200

Receiving unit 210 — Obtaining unit 220 — Sending unit 230

Network side device

FIG. 10

300

Receiving unit 310 — Processing unit 330 — Sending unit 320

Network side device

FIG. 11

400

| 410 | 420 |

Processor

Memory

440

Application program

430

Network side device

Transceiver

Data

## FIG. 12

500

510

Processor

520

Memory

540

Application program

530

Network side device

Transceiver

Data

## FIG. 13

600

610 620

Processor

Memory

640

Application
program

630

Network side
device

Transceiver

Data

FIG. 14

**EP 3 806 557 B1**

**Patent documents cited in the description**

- US 2016165638 A1